# EUROPEAN PATENT APPLICATION

(11) **EP 3 072 737 A1**
(43) Date of publication of application: **28.09.2016**
(21) Application number: 16162629.6
(22) Date of filing: 29.03.2016
(51) Int. Cl.: B60N 3/04, F16B 21/07, F16B 2/12, F16B 5/06

(54) **VEHICLE FLOOR COVER RETENTION DEVICES**

(30) Priority: 27.03.2015 US 201514671599; 29.07.2015 US 201514812663; 02.10.2015 US 201514874193
(71) Applicant: MacNeil IP, LLC, Bolingbrook, IL 60440 (US)
(72) Inventor: Kaufman, Judd, C., Clarendon Hills, Illinois (US); Thom, Allan, R., Burr Ridge, Illinois 60527 (US); Masanek, Frederick, W., Jr., Barrington, Illinois 60010 (US); Iverson, David, S., Oak Brook, Illinois 60523 (US)
(74) Representative: Adamson Jones

(57) **Abstract**

A device for fastening a vehicle floor cover (2304) to carpeting in a vehicle foot well includes a body with a first and second face. A fastener, sized to be received into a grommet, extends from the second face. A retention grommet has a bottom grommet (2306) and a top grommet (2308). A floor cover retention flange (2406) extends radially outwardly from an outer sidewall (2402) of the bottom grommet. The outer sidewall extends upwardly from the retention flange to a hinge plane (2407) of the bottom grommet. Plural fingers (2408) are disposed around the bottom grommet axis (X) so as to be angularly spaced from each other and an inner surface (2502) of the outer sidewall. An upper end (2414) of each finger is joined to the outer sidewall at the hinge plane. Near a free, downwardly displaced end (2412) of each finger, a retention bead (2416) is formed to have an upwardly and radially outwardly inclined surface (2422). This surface engages a retention post (2302) of any of several vehicle foot well affixation devices (3102).

## Description

### BACKGROUND OF THE INVENTION

In most conventional vehicles, such as cars, trucks and SUV's, the foot wells for the occupants are carpeted. Often the automotive manufacturers offer floor mats to protect these foot wells. Automotive aftermarket manufacturers also offer floor covers to protect the foot wells. Vehicle floor covers, including floor mats and trays, preferably are furnished with placement and securing aids so that they will stay in one place in the vehicle foot well.

To aid in the placement and stability of vehicle floor covers and ultimately provide a more solid feel to the occupant's feet, vehicle manufacturers (commonly called original equipment manufacturers or OEMs) usually place retention posts or other structure in the vehicle foot wells. Often the floor mats or trays have respective apertures sized to accept the retention posts through them. However, retention post morphology and use vary from manufacturer to manufacturer and may even vary from model to model and seat to seat. The variance in OEM mat retention systems makes the provision of aftermarket floor mats and trays for these models more costly and less universal. In many instances, OEMs will provide floor mat retention devices for the driver's side but none for the passenger's side and none for any other seat position.

Thus a need exists for a vehicle floor cover retention device that can be used to secure a vehicle floor mat or tray when there is no retention post or other device or structure in the foot well and that is easy for a consumer to use.

Many OEM studs or posts have a shaft of limited diameter that terminates in an enlarged head. Retention post sizes vary among makes and models of vehicles. In addition, a hole in a floor cover doesn't always provide the secure fit desired for a floor cover. A grommet may be used to engage the retention post and floor cover in a tighter, more secure manner. A grommet that fits many retention posts would be able to be used in multiple makes and models of vehicles.

### SUMMARY OF THE INVENTION

According to one aspect of the invention, a device is provided for fastening a vehicle floor cover to carpeting in a vehicle foot well. The device includes a body with a first and second face and an axis perpendicular to the first and second faces. Projections extend from the first, lower face with the projections being in linear rows forming a two-dimensional array. Each projection has a vertical face in alignment with the axis with the vertical faces in any one row being coplanar. The vertical faces in a first row face the vertical faces in a second row. A fastener, sized to be received in a grommet, extends from the second, upper face.

According to another aspect of the invention, there is provided a system for releasably attaching a vehicle floor cover to carpeting in a vehicle foot well. The carpet affixation member has a body with a first face and a second face. An axis is perpendicular to the first and second faces. Projections extend from the first face in parallel to this axis. A fastener integrally formed with the body extends upwardly from the second face. A top grommet or cap receives the fastener and thereby attaches the vehicle floor cover to the carpeting.

According to yet another aspect of the invention, there is provided a system for releasably attaching a vehicle floor cover to carpeting in a vehicle foot well. The carpet affixation member has a body with a first face and a second face. An axis is perpendicular to the first and second faces. Projections extend from the first face in parallel to this axis. A fastener integrally formed with the body extends upwardly from the second face. A bottom grommet, with a bottom grommet fastener, attaches to the fastener of the affixation member. A top grommet receives the bottom grommet fastener and thereby attaches the vehicle floor cover to the carpeting.

According to yet another aspect of the invention, a method of manufacturing a device for affixing a vehicle floor cover to the carpeting of a foot well is provided. The steps include providing a mold with a top side and a core side. A plane splits the top side from the core side. A top side mold cavity molds the second face of the device. Several spaced-apart parallel ejector bars slide in channels of the core body in alignment with the axis. A top surface of a core body and top surfaces of the ejector bars mold a first face of the device. Each ejector bar has at least one vertical face and along the vertical face there are spaced-apart spike cavities.

To mold the device, the ejector bars are placed so that they are coplanar with the top surface of the core body. The top side of the mold is closed and a polymer is injected into the closed mold. When the mold is opened, the ejector bars are moved from their coplanar position to one in which the top surfaces of the ejector bars are above the top surface of the core body, thereby ejecting the molded device.

In an alternative embodiment, the ejector bars are replaced with a cylindrical ejector sleeve that can be coaxial with an axis of the retention device. Each of the projections or spikes has a vertical face that is located at the exterior and/or interior surface of the ejector sleeve. In this embodiment, the projections or spikes may be arranged in one or two annular arrays.

According to another aspect of the invention, a device is provided for fastening a vehicle floor cover to carpeting in a vehicle foot well. The device includes a body with a first and second face and projections extending from the first face. The projections are in linear rows forming a two-dimensional array. A fastener, sized to be received in a grommet, extends from the second face.

A principal advantage of the above device is that it can be placed anywhere in the foot well to accommodate foot covers with holes in various locations. Another advantage is that device(s) according to the invention can be furnished for those floor covers for which the vehicle manufacturer has not provided any retention devices in the vehicle foot well. This may occur, for example, where the vehicle manufacturer has provided no such retention devices for any seating position, or where the vehicle manufacturer has provided retention devices only for the front driver's side foot well. Devices according to the invention may also be used to attach a mat or tray to a vehicle floor in the second or third row of seats, or to attach a cargo liner to the floor of a vehicle cargo area.

According to yet another aspect of the invention, a system for attaching a floor cover to a vehicle foot well includes a bottom grommet and a top grommet. The bottom grommet is formed around an axis and has a floor cover retention flange that radially outwardly extends from the outer surface of an upstanding outer sidewall. The outer sidewall upwardly extends to a hinge plane, which may be collocated with the top of the outer sidewall. The top or hinge plane of the bottom grommet may have an annulus that extends radially inwardly from the outer sidewall to an inner end of the hinge plane. Several fingers have respective upper ends that join to the inner end of the annulus and extend downwardly to respective finger lower ends. Each finger has a bead near its lower end that radially inwardly extends from a more general inner sidewall surface of the finger. In combination with the other fingers, this bead is adapted to engage a vehicle foot well retention post head of any of several types with an interference fit. A top grommet is provided that fastens to an outer surface of the outer sidewall of the bottom grommet. The system further includes an affixation device that is adapted for attachment to a vehicle foot well. An upstanding retention post of the affixation device is adapted to engage the fingers of the bottom grommet. A lower surface of the affixation device may include a plurality of downwardly extending projections for engaging a carpeted foot well surface, or may have an adhesive layer that is adapted to be affixed to an uncarpeted surface of the vehicle foot well.

According to another aspect of the invention, a system for attaching a vehicle floor cover to a vehicle foot well has a bottom grommet and a top grommet. The bottom grommet has an outer sidewall formed around an axis. A floor cover retention flange radially outwardly extends from the outer surface of the outer sidewall. The outer sidewall extends axially upwardly from the retention flange to a top plane of the bottom grommet. The outer sidewall has an inner surface. Plural fingers, integrally formed with the outer sidewall, are radially inwardly spaced from the inner surface of the outer sidewall, and are angularly spaced apart from each other. Each finger has a lower end axially and downwardly spaced from the top plane of the outer sidewall. Each finger has a bead disposed near its lower end. Each bead has an innermost margin and an inclined surface which extends upwardly and outwardly from the innermost margin of the bead to a general inner sidewall surface of the finger. This inclined surface is adapted to engage, with an interference fit, the enlarged heads of each of several types of retention posts. A top grommet is adapted to fasten to the outer surface of the outer sidewall of the bottom grommet. The system further includes an affixation device for attachment to the vehicle foot well. A retention post stands up from the affixation device body and is adapted to engage the fingers of the bottom grommet. The affixation device may have a plurality of projections that extend downward from a lower surface of its body to engage a carpeted surface of the vehicle foot well, or may have an adhesive layer that is adapted to be affixed to a smooth surface of the vehicle foot well.

In any of the above embodiments, the bottom grommet may be further provided with a plurality of spaced-apart vertical ribs. These ribs are angularly spaced around and are in alignment with the axis; each vertical rib is disposed between neighboring fingers. The fingers have inner sidewall surfaces that conform to an imaginary cylinder, a diameter of which is preselected to be larger than the largest type of post head that the grommet is designed to accommodate. The vertical ribs each extend, radially inwardly, from the inner surface of the bottom grommet outer sidewall to the imaginary cylinder. These ribs resist lateral movement of the grommet relative to the retention post once the grommet has been snapped over the post.

Alternatively or in addition, each finger of the bottom grommet may be provided with a reinforcing rib that is aligned with the axis and that extends from an inner surface of the outer sidewall of the bottom grommet to an outer surface of the finger. An angular extent of the reinforcing rib, relative to the axis, is much smaller than an angular extent of the finger for which it is provided to brace, such as being one-fourth or less of the angular extent of the finger proper.

A principal technical advantage of one embodiment of the invention is that the inclined plane of each finger bead provides an extensive surface, different points of which can engage different enlarged post head structures with an interference fit. This in turn permits the use of the grommet with floor covers for many makes and models of vehicles. The provision of a single grommet for multiple vehicle types reduces the overall manufacturing, tooling, research and development costs for the vehicle floor mats and trays fitted with the grommets.

The invention also provides a device for fastening a vehicle floor cover to carpeting in a vehicle foot well, the device comprising: a body having a first face, a second face opposed to the first face and an axis defined to be perpendicular to the first and second faces; a plurality of projections extending from the first face, each projection spaced from adjacent projections, the projections forming a two-dimensional array; the projections formed in linear rows and each having a vertical face in alignment with the axis, the vertical faces in any one row being coplanar, the rows including a first row and a second row parallel to and adjacent to the first row, the vertical faces in the first row oriented to face the vertical faces in the second row; and a fastener extending from the second face along the axis in opposition to the projections, the fastener sized to be received into a grommet of a vehicle floor cover.

The body may be formed from nylon.

The projections may be spikes.

Each of the plurality of projections may have a triangular base.

The invention also provides a system for releasably attaching a vehicle floor cover to carpeting in a vehicle foot well, comprising: a carpet affixation member, the affixation member having a body with a first face, a second face opposed to the first face and an axis formed to be perpendicular to the first face, a plurality of spikes extending downwardly in parallel to the axis from the first face and adapted to penetrate the carpeting, a fastener integrally formed with the body and extending upwardly from the second face;

a vehicle floor cover having an upper surface and a lower surface, a hole formed from the lower surface to the upper surface, the hole adapted to receive the fastener; and a top grommet, an orifice of the top grommet receiving the fastener, the top grommet and affixation member releasably attaching the vehicle floor cover to the carpeting.

The first fastener may include a mushroom head which snaps into the orifice of the top grommet in order to affix the top grommet to the affixation member.

The vehicle floor cover may have two holes, one fastener received into each of the holes, for each hole a respective top grommet receiving a respective fastener.

The top grommet may be a closed cap that snaps to the fastener.

Said foot well may be a passenger's side foot well and said vehicle floor cover a passenger's side floor cover, the system further including a driver's side vehicle foot well, at least one OEM floor cover affixation device upstanding from a floor of the driver's side vehicle foot well, and a driver's side floor cover, a grommet in the driver's side floor cover receiving the OEM floor cover affixation device.

The invention also provides a system for releasably attaching a vehicle floor cover to carpeting in a vehicle foot well, comprising: a carpet affixation member, the affixation member having a body with a first face, a second face opposed to the first face and an axis formed at a perpendicular angle to the first face, a plurality of spikes extending downwardly in parallel to the axis from the first face and adapted to penetrate the carpeting, a fastener integrally formed with the body and extending upwardly from the second face; a bottom grommet joined to the fastener, a bottom grommet fastener extending upwardly from the bottom grommet; a vehicle floor cover having an upper surface and a lower surface, a hole formed from the lower surface to the upper surface, the hole adapted to receive the bottom grommet fastener; and a top grommet, an orifice of the top grommet receiving the bottom grommet fastener to releasably attach the vehicle floor cover to the carpeting.

The first fastener may include a mushroom head which snaps into the orifice of the grommet in order to affix the vehicle floor cover to the carpeting.

The vehicle floor cover may have two holes, one fastener received into each of the holes, a respective top grommet receiving a respective fastener.

The top grommet may be a closed cap that snaps to the fastener.

Said foot well may be a passenger's side foot well and said vehicle floor cover a passenger's side floor cover, the system further including a driver's side vehicle foot well, at least one OEM floor cover affixation device upstanding from a floor of the driver's side vehicle foot well, and a driver's side floor cover, a grommet in the driver's side floor cover receiving the OEM floor cover affixation device.

The invention also provides a device for fastening a vehicle floor cover to carpeting in a vehicle foot well, the device comprising: a body having a first face, a second face opposed to the first face and an axis defined to be perpendicular to the first and second faces; a plurality of projections extending from the first face, each projection spaced from adjacent projections, the projections forming a two-dimensional array, the projections formed in linear rows; and a single fastener extending from the second face along the axis in opposition to the projections, the fastener sized to be received in a grommet.

The fastener may include a mushroom head which snaps into the orifice of the grommet in order to affix the vehicle floor cover to carpeting.

The invention also provides a floor cover grommet adapted for use with vehicle foot well floor cover retention posts of different shapes, the grommet comprising: a bottom grommet, an outer sidewall of the bottom grommet formed around an axis and having an outer surface and an inner surface, a floor cover retention flange of the bottom grommet joined to the outer sidewall and radially outwardly extending from the outer surface of the outer sidewall, the outer sidewall of the bottom grommet extending axially upwardly from the retention flange to a hinge plane of the bottom grommet; an annulus disposed in the hinge plane of the bottom grommet and radially inwardly extending from the outer sidewall of the bottom grommet to an inner end of the annulus; a plurality of fingers disposed around the axis to be angularly spaced apart from each other, an upper end of each finger joined to the inner end of the annulus so that the annulus spaces said upper end from the inner surface of the outer sidewall, each finger extending axially downwardly from the upper end of the finger to a lower end of the finger and having an inner sidewall surface disposed between the upper and lower finger ends that is in alignment with the axis; for each finger, a bead formed proximate to the lower end of the finger and radially inwardly extending from the inner sidewall surface of the finger, the bead adapted to engage any of a plurality of differently shaped, predetermined vehicle foot well retention post heads with an interference fit; and a top grommet, a downwardly extending sidewall of the top grommet adapted to fasten to the outer surface of the outer sidewall of the bottom grommet.

A sidewall of the top grommet may snap fit to the outer surface of the outer sidewall of the bottom grommet.

The outer sidewall of the bottom grommet may have an engagement ridge formed at an angle to the axis and formed to extend radially outwardly from the outer surface of the sidewall, the top grommet sidewall having an inner surface and a latch radially inwardly extending from the last said inner surface, the latch engaging the engagement ridge of the outer sidewall of the bottom grommet.

The top grommet may be in the form of a cap, the top grommet completely covering a top of the bottom grommet.

The upper end of each finger may have a first section that extends inwardly from the inner end of the annulus, a second section of the finger extending downwardly from the first section of the finger.

For each finger, the bead of the finger may have an innermost margin, a spacing between the inner surface of the outer sidewall and an outer surface of each finger being greater than or equal to a distance between the innermost margin of the bead and the inner sidewall surface of the finger.

The upper end of the finger and the annulus may form a hinge around which the finger flexes.

The floor cover grommet may further comprise a plurality of angularly spaced apart vertical ribs disposed in alignment with and around the axis, each vertical rib positioned between and spaced from adjacent ones of the fingers, the inner sidewall surfaces of the fingers conforming to an imaginary cylinder aligned on the axis, each vertical rib extending radially inwardly from the inner surface of the outer sidewall of the bottom grommet to the imaginary cylinder.

The bottom grommet may be integrally molded from a polymeric material.

The invention also provides a floor cover grommet adapted for use with vehicle foot well floor cover retention posts of different shapes, the grommet comprising: a bottom grommet, an outer sidewall of the bottom grommet formed around an axis and having an inner surface and an outer surface, a floor cover retention flange of the bottom grommet joined to the outer sidewall and radially outwardly extending from the outer surface of the outer sidewall, the outer sidewall extending axially upwardly from the retention flange to a top plane of the bottom grommet; a plurality of fingers formed around the axis to be angularly spaced from each other, each finger radially inwardly spaced from the inner surface of the outer sidewall, an inner sidewall surface of each finger disposed on an imaginary cylinder aligned with the axis, the fingers integrally formed with the outer sidewall of the bottom grommet; each finger having a lower end axially downwardly spaced from the top plane of the outer sidewall, each finger having a bead, an inner end of the bead disposed radially inwardly from the inner sidewall surface of the last said finger and disposed near the lower end of the finger, each bead having an innermost margin that is disposed closest to the axis, an inclined surface of the bead extending upwardly and outwardly from the innermost margin of the bead to terminate at the inner sidewall surface of the finger; and a top grommet, a downwardly extending sidewall of the top grommet adapted to attach to the outer surface of the outer sidewall of the bottom grommet.

A radial distance, taken at right angles to the axis, between the innermost margin of the bead and the inner sidewall surface of the respective finger, may be in the range of about 1 to about 3 mm.

The inclined surface of the bead may be at an angle relative to the axis in the range of about 30 to about 60 degrees.

The angle may be 45 degrees.

Each bead may have a second inclined surface extending downwardly and outwardly from the innermost margin of the bead to the lower end of the finger.

The top grommet may be in the form of a cap that completely covers a top of the bottom grommet.

Each finger may have an outer sidewall surface, a radial distance, taken at right angles to the axis, between the innermost margin of the bead and the inner sidewall surface of the respective finger being less than or equal to a radial spacing, taken at right angles to the axis, between the inner surface of the outer sidewall of the bottom grommet and the outer sidewall surface of the finger.

The floor cover grommet may further comprise a plurality of angularly spaced apart vertical ribs disposed in alignment with and around the axis, each vertical rib positioned between and spaced from adjacent ones of the fingers, each vertical rib extending radially inwardly from the inner surface of the outer sidewall of the bottom grommet to the imaginary cylinder.

The bottom grommet may be integrally molded from a thermoplastic polymeric material.

The invention also provides a floor cover grommet adapted for use with vehicle foot well floor cover retention posts of different shapes, the grommet comprising: a bottom grommet, an outer sidewall of the bottom grommet formed around an axis and having an outer surface and an inner surface, a floor cover retention flange of the bottom grommet joined to the outer sidewall and radially outwardly extending from the outer surface of the outer sidewall, the outer sidewall extending axially upwardly from the retention flange to a top plane of the bottom grommet; a plurality of fingers formed around the axis to be angularly spaced from each other, each finger having an outer sidewall surface that is radially inwardly spaced from the inner surface of the outer sidewall, an inner sidewall surface of each finger disposed on an imaginary cylinder aligned with the axis, the fingers integrally formed with the outer sidewall of the bottom grommet; each finger having a lower end axially and downwardly spaced from the top plane of the outer sidewall, each finger having a bead, an inner end of the bead disposed radially inwardly from the inner sidewall surface of the last said finger and near the lower end of the finger, each bead having an innermost margin that is disposed closest to the axis, an inclined surface of the bead extending upwardly and outwardly from the innermost margin to terminate at the inner sidewall surface of the finger; for each finger, a vertical rib radially inwardly extending from the inner surface of the outer sidewall to the outer sidewall surface of the finger, an angular width, relative to the axis, of the vertical rib being less than or equal to one-fourth of a corresponding angular width of the finger; and a top grommet, a downwardly extending sidewall of the top grommet adapted to fasten to the outer surface of the outer sidewall of the bottom grommet.

The invention also provides a system for attaching a floor cover to a vehicle foot well, the system comprising: a bottom grommet, an outer sidewall of the bottom grommet formed around an axis and having an outer surface and an inner surface, a floor cover retention flange of the bottom grommet joined to the outer sidewall and radially outwardly extending from the outer surface of the outer sidewall, the outer sidewall of the bottom grommet extending axially upwardly from the retention flange to a hinge plane of the bottom grommet; an annulus disposed in the hinge plane of the bottom grommet and radially inwardly extending from the outer sidewall of the bottom grommet to an inner end of the annulus; a plurality of fingers disposed around the axis to be angularly spaced apart from each other, an upper end of each finger joined to the inner end of the annulus so that the annulus spaces said upper end from the inner surface of the outer sidewall, each finger extending axially downwardly from the upper end of the finger to a lower end of the finger and having an inner sidewall surface disposed between the upper and lower finger ends that is in alignment with the axis; for each finger, a bead formed proximate to the lower end of the finger and radially inwardly extending from the inner sidewall surface of the finger, the bead adapted to engage any of a plurality of differently shaped, predetermined vehicle foot well retention post heads with an interference fit; a top grommet, a downwardly extending sidewall of the top grommet adapted to fasten to the outer surface of the outer sidewall of the bottom grommet; and an affixation device adapted for attachment to a vehicle foot well, the affixation device having an affixation device body with an upper surface and a lower surface, a floor cover retention post upwardly extending from the upper surface of the affixation device body and adapted to engage the fingers of the bottom grommet.

The affixation device may be adapted to be affixed to carpeting, a plurality of projections extend from the lower surface of the affixation device body, each projection spaced from adjacent projections, the projections forming a two-dimensional array.

The affixation device may be adapted to be affixed to an uncarpeted surface of the vehicle foot well, an adhesive layer attached to and extending downwardly from the lower surface of the affixation device body.

The invention also provides a system for attaching a floor cover to a vehicle foot well, the system comprising: a bottom grommet, an outer sidewall of the bottom grommet formed around an axis and having an inner surface and an outer surface, a floor cover retention flange of the bottom grommet joined to the outer sidewall and radially outwardly extending from the outer surface of the outer sidewall, the outer sidewall extending axially upwardly from the retention flange to a top plane of the bottom grommet; a plurality of fingers formed around the axis to be angularly spaced from each other, each finger radially inwardly spaced from the inner surface of the outer sidewall, an inner sidewall surface of each finger disposed on an imaginary cylinder aligned with the axis, the fingers integrally formed with the outer sidewall of the bottom grommet; each finger having a lower end axially downwardly spaced from the top plane of the outer sidewall, each finger having a bead, an inner end of the bead disposed radially inwardly from the inner sidewall surface of the last said finger and disposed near the lower end of the finger, each bead having an innermost margin that is disposed closest to the axis, an inclined surface of the bead extending upwardly and outwardly from the innermost margin of the bead to terminate at the inner sidewall surface of the finger; a top grommet, a downwardly extending sidewall of the top grommet adapted to attach to the outer surface of the outer sidewall of the bottom grommet; and an affixation device adapted for attachment to a vehicle foot well, the affixation device having an affixation device body with an upper surface and a lower surface, a floor cover retention post upwardly extending from the upper surface of the affixation device body and adapted to engage the fingers of the bottom grommet.

Each finger may have an outer surface facing the inner surface of the outer sidewall of the bottom grommet, the bottom grommet further including, for each finger, at least one guard rib radially extending from the inner surface of the outer sidewall, an inner margin of said at least one guard rib being spaced from the outer surface of the finger with which it is associated.

The bottom grommet may include, for each finger, a plurality of guard ribs including said at least one guard rib, each of the plurality of guard ribs being spaced from adjacent ones of the plurality of guard ribs.

At least one guide rib may radially extend from the inner surface of the outer sidewall of the bottom grommet, the guide rib positioned in between adjacent fingers, a thickness of the guide rib being less than the radial spacing between two adjacent fingers, an inner margin of the guide rib being spaced radially outwardly from the innermost margin of the bead.

The affixation device may be adapted to be affixed to carpeting, a plurality of projections extend from the lower surface of the affixation device body, each projection spaced from adjacent projections, the projections forming a two-dimensional array.

The affixation device may be adapted to be affixed to an uncarpeted surface of the vehicle foot well, an adhesive layer attached to and extending downwardly from the lower surface of the affixation device body.

Each finger may have an outer surface facing the inner surface of the outer sidewall of the bottom grommet, the bottom grommet further including, for each finger, a vertical rib radially extending from the inner surface of the outer sidewall to the outer surface of the finger, an angular width, relative to the axis, of the vertical rib being less than or equal to one-fourth of a corresponding angular width of the finger.

### BRIEF DESCRIPTION OF THE DRAWINGS

Further aspects of the invention and their advantages can be discerned in the following detailed description, in which like characters denote like parts and in which:
FIGURE 1A is a perspective view of the top of a device according to one embodiment of the invention;
FIGURE 1B is a perspective view of the bottom of the device shown in Figure 1A;
FIGURE 1C is a detail of the bottom of the device shown in Figure 1B;
FIGURE 2 is a detailed exploded isometric view of a vehicle floor cover retention system using the device seen in Figures 1A and 1B;
FIGURE 3 is a cross sectional view taken through an assembled vehicle floor cover, device and top grommet;
FIGURE 4 is a detailed exploded isometric view of a second embodiment of a vehicle floor cover retention system using another device according to the invention;
FIGURE 5 is a cross sectional view taken through an assembled vehicle floor cover, device, top grommet and bottom grommet as seen in Figure 4;
FIGURE 6A is a top view of a vehicle floor cover according to one embodiment of the invention;
FIGURE 6B is a bottom view of a vehicle floor cover shown in Figure 6A;
FIGURE 7A is perspective view of a third embodiment of a device according to the invention;
FIGURE 7B is a cross sectional view of a vehicle floor cover retention system using the embodiment shown in Figure 7A;
FIGURE 8 is a perspective view of a driver's side vehicle foot well with OEM retention devices according to the prior art;
FIGURE 9 is a perspective view of a driver's side vehicle foot well with a vehicle floor cover installed;
FIGURE 10 is a perspective view of a passenger's side vehicle foot well without OEM retention devices and according to the prior art;
FIGURE 11 is a perspective view of a passenger's side vehicle foot well with a vehicle floor cover installed using the device shown in FIGURES 1A and 1B;
FIGURE 12 is schematic block diagram showing steps in a first manufacturing process according to the invention;
FIGURE 13 is a perspective view of a mold used to make the device with ejector bars in a first position;
FIGURE 14 is a perspective view of the mold core with ejector bars in a second position;
FIGURE 15 is a perspective view of the mold core with the ejector bars in a second position and spike cavities being visible;
FIGURE 16 is a perspective top view of another embodiment of the floor cover retention device, shown prior to its attachment to a thermoformed floor cover;
FIGURE 17 is a sectional view taken through a vertical axis of the device shown in FIGURE 16, after a floor cover has been attached to it by thermoforming;
FIGURE 18 is a top perspective view of a floor cover equipped with the device shown in FIGURE 16, the retention device being shown in hidden line;
FIGURE 19 is a bottom perspective view of an embodiment of the device shown in FIGURE 16;
FIGURE 20 is a perspective view showing the assembly of a retention device to a vacuum mold prior to a floor cover thermoforming operation;
FIGURE 21 is a top perspective detail of FIGURE 20, showing the mold retention device receiving structure;
FIGURE 22 is a bottom perspective view of an alternative embodiment of the invention featuring annular arrays of projections, and also illustrating a contact footprint of a cylindrical ejector sleeve.
FIGURE 23 is an isometric exploded view showing a portion of a vehicle floor cover, a bottom grommet, a vehicle foot well retention stud and a retention grommet cap (or top grommet);
FIGURE 24 is a top isometric view of the bottom grommet shown in FIGURE 23;
FIGURE 25 is a bottom isometric view of the bottom grommet shown in FIGURE 24;
FIGURE 26 is a side sectional view, on a plane including a grommet axis, of the bottom grommet and top grommet of FIGURE 23 as assembled;
FIGURE 27 is a sectional view, on a plane including the grommet axis, of the embodiment shown in FIGUREs 23 - 26, shown as fastening a vehicle floor cover to a first vehicle floor cover retention post;
FIGURE 27A is a simplified sectional view similar to that shown in Figure 27, of the embodiment shown in FIGUREs 23 - 26, shown as fastening a vehicle floor cover to a second vehicle floor cover retention post;
FIGURE 27B is a simplified sectional view similar to that shown in Figure 27A, of the embodiment shown in FIGUREs 23 - 26, shown as fastening a vehicle floor cover to a third vehicle floor cover retention post;
FIGURE 27C is a simplified sectional view similar to that shown in FIGUREs 27A and 27B, of the embodiment shown in FIGUREs 23 - 26, shown as fastening a vehicle floor cover to a fourth vehicle floor cover retention post;
FIGURE 28 is top isometric view of a further embodiment of the bottom grommet;
FIGURE 29 is a top isometric view of the above embodiment of the bottom grommet snapped over a vehicle floor cover retention post;
FIGURE 30 is a bottom isometric view of a further embodiment of the bottom grommet;
FIGURE 31 is a vertical sectional view, taken through axis X, of a further embodiment of the invention shown as assembled to a floor cover and engaging a carpet;
FIGURE 32 is a vertical sectional view, taken through axis X, of a further embodiment of the bottom grommet;
FIGURE 33 is a bottom isometric view of a further embodiment of the bottom grommet;
FIGURE 34 is a vertical sectional view, taken through axis X, of a further embodiment of the invention shown as assembled to a floor cover and engaging a smooth surface in a vehicle foot well;
FIGURE 35 is a bottom isometric view of a further embodiment of an affixation device;
FIGURE 36 is a bottom isometric view of a further embodiment of a bottom grommet for use with the invention;
FIGURE 37 is a bottom view of the bottom grommet shown in FIGURE 36; and
FIGURE 38 is a side view of the bottom grommet shown in FIGUREs 36 and 37, shown in a possible position that it could take while fitting the grommet and an attached floor cover to a vehicle foot well post.

### DETAILED DESCRIPTION

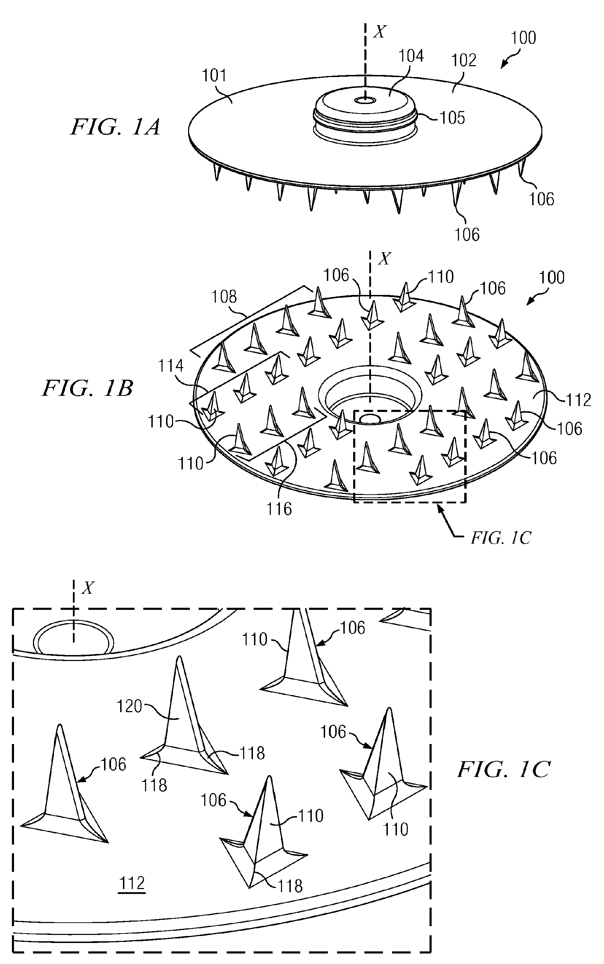

FIGURES 1A and 1B illustrate a first embodiment of a device indicated generally at 100. The body 101 of the device may be formed of nylon or another suitable compound. The device 100 has a first lower face 112 and a second upper face 102. An axis X is perpendicular to the first and second faces (112, 102). The body 101 is thin and flat, and in this illustrated embodiment is shown to be a generally circular disk. Other embodiments may have a body 101 that is a different shape such as square, rectangular, hexagonal, or any other shape which produces commercially acceptable results.

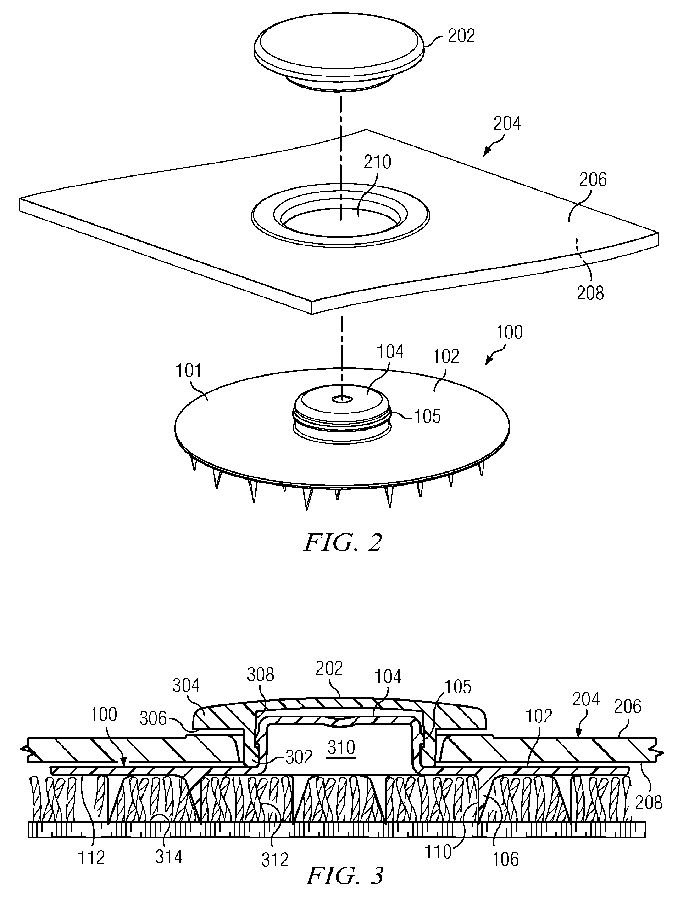

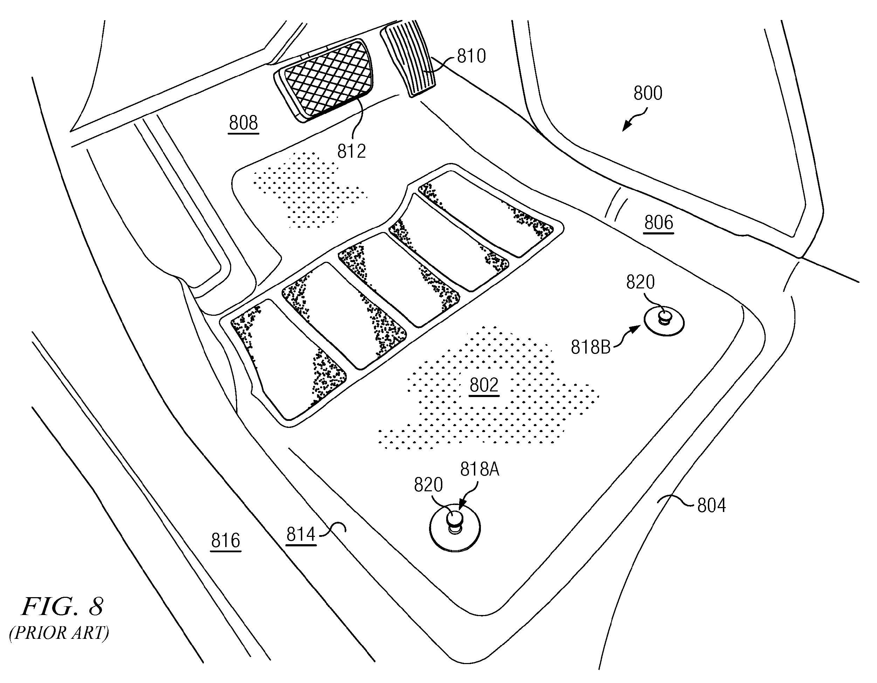

Many projections 106 downwardly extend from the first face 112 in parallel with the device axis X. In this embodiment, the projections 106 are arranged in linear rows 108. In the illustrated embodiment the projections 106 have a triangular base and are pyramidal in shape. The projections 106 in the illustrated embodiment are spikes. Other embodiments may have projections that are different shapes and/or have bases of different shapes such as substantially circular cones or rectangular pyramids. The projections 106 bite into the carpeting of the foot well floor *(See* FIGURE 3 and 802 in FIGURE 8) which prevents the device 100, and the floor cover attached to it, from moving. In addition the device 100 may be positioned anywhere in the foot well where the entire device 100 can be received on a substantially flat area. In other words, placement on the foot well floor *(See* 802 in FIGURE 8) in a substantially flat area is appropriate whereas placement on the foot well floor 802 where it transitions to foot well walls 804, 806, 808, 814 (FIGURE 8) is less so, depending on the severity of the curved transitions. With the ability to place the device 100 anywhere on the foot well floor, almost all vehicle floor covers will be compatible with the device and can be releasably fastened to the foot well floor using this device.

Each of the projections 106 in this illustrated embodiment has one flat vertical face 110 which is in alignment with axis X. Projections 106 in other embodiments may not have a flat vertical face 110. In each linear row 108, the vertical faces 110 of the projections 106 in that row 108 are coplanar. There is at least a first row 114 and a second row 116 on the lower device face 112. The vertical faces 110 in the first row 114 are oriented to face the vertical faces 110 of the second row 116. The embodiment illustrated in FIGURE 1B shows more than two rows in which case the pattern is repeated. Alternative embodiments may have a different number of rows. As illustrated, the vertical faces 110 of the end rows, such as the row 108 appearing leftmost in this view, do not have a corresponding facing row. In the illustrated embodiment, the shape, number and placement of the projections 106 was chosen to achieve a commercially acceptable stable attachment for floor cover placement and are provided as a function of carpet density and thickness. Other embodiments may include variations that achieve a commercially acceptable stable attachment for floor cover placement. As pressed into the vehicle floor carpeting, the size, number, and length of projections 106 should be selected so as to successfully withstand the largest shear force likely to be imposed on the mat or tray by an occupant's feet.

FIGURES 1A - 1C illustrate an embodiment where the projections 106 extend approximately 0.1 to 0.3 inches (0.25 - 0.76 cm) from the lower face 112. In alternative embodiments the projections 106 may have different lengths. In the illustrated embodiment the rows 108, 114, 116 are approximately 12 millimeters apart. In alternative embodiments the rows 108, 114, 116 may be spaced closer together or farther apart and may not be equidistant from each other. In each row 108, 114, 116, the projections 106 are spaced from adjacent projections 106 by approximately 9.6 millimeters. In alternative embodiments the projections 106 may be closer to or farther from adjacent projections 106 in the same row 108, 114, 116 and may not be uniformly spaced. In the illustrated embodiment, the projections 106 have a triangular base where each leg of the base is approximately 2.5 millimeters wide. Alternative embodiments with projections 106 with triangular bases may have triangular bases with wider or narrower widths. The triangular bases of each projection have concavely curved transitions 118 where the base of the projection on the first face 112 meets the first face 112 and other faces 120 of the projections. The curved transitions 118 add reinforcement against shear forces, i.e., forces acting perpendicular to axis X.

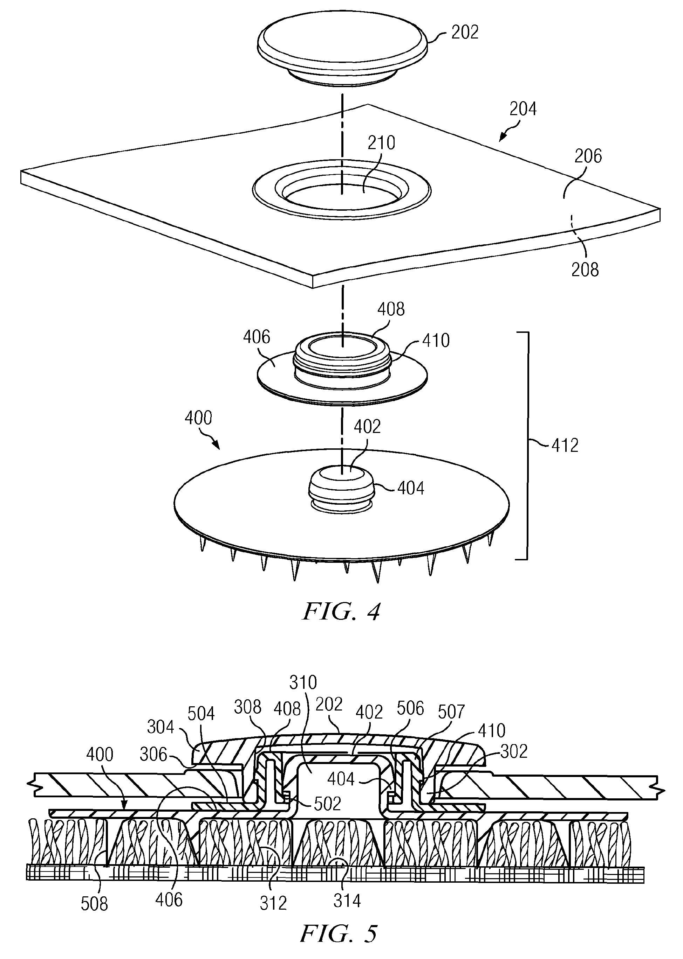

A fastener or knob 104 upwardly extends from the relatively smooth second, upper face 102. The fastener 104 is sized to be received by a grommet or cap 202 (FIGURE 2) or 406 (FIGURE 4). In the illustrated embodiment, the fastener 104 has an outwardly projecting convex annular ring 105 that snaps into a grommet (*See* 202 on FIGURE 2 and 406 on FIGURE 4). In the illustrated embodiment, fastener 104 is substantially cylindrical and is formed around axis X. The ring 105 is upwardly displaced from face 102. This creates a "mushroom head" fastener 104 in which a stem thereof has a smaller diameter than a head defined by ring 105.

FIGURE 2 illustrates a vehicle floor cover 204 fastened between the affixation device 100 and the cap or top grommet 202. The mat or tray 204 has an upper surface 206 and a lower surface 208. A hole 210 extends from the upper surface 206 to the lower surface 208. The hole 210 is adapted to receive the fastener 104 or a carpet affixation bottom unit *(See* 412 on Figure 4). A top grommet or cap 202 snaps onto the fastener 104, or alternatively to a carpet affixation bottom unit 412 (FIGURE 4) to attach the vehicle floor cover 204 to the vehicle carpet. The vehicle floor cover 204 may be a mat, a three dimensional floor tray or any other vehicle floor cover for use in a vehicle foot well. Once the vehicle floor cover 204 is attached to the device 100, and once device 100 is pressed into the carpet pile, the vehicle floor cover 204 will remain in place in the vehicle foot well.

FIGURE 3 illustrates a cross-sectional view of the grommet or cap 202 connected to the fastener 104. The grommet 202 has a top portion 304 that extends radially beyond the annular ring 105 of the fastener 104 and over all of the hole 210. While the illustrated grommet 202 is a closed cap, alternatively the grommet 202 may have a top portion 304 that is open. The top portion 304 of the grommet 202 has a lower surface 306. The vehicle floor cover is captured between the lower surface of the grommet 306 and the top surface 102 of the affixation device 100.

In operation, the fastener 104 is inserted into the hole 210 of the vehicle floor cover 204. The grommet 202 has a radially inwardly extending engagement ridge 302 which snaps over the annular ring 105 of the fastener 104. The engagement ridge 302 extends from the downwardly depending substantially cylindrical sidewall 308. The cylindrical sidewall 308 forms an orifice 310 that receives the fastener 104. When the grommet 202 is attached to the fastener 104 the vehicle floor cover 204 is positioned in between the lower surface 306 of the grommet 202 and the second face 102 of the device 100. The device is placed on the vehicle foot well carpet and bites into the carpet pile 312. The projections 106 extend through the carpet pile 312 but are sized so as not to extend through the carpet backing 314 of the vehicle foot well carpeting 310. Accordingly, the floor cover is secured to the vehicle foot well.

FIGURE 4 is an exploded view illustrating how the vehicle floor cover 204 is fastened between an affixation device 400, a bottom grommet 406, and the top grommet or cap 202. The floor cover or mat 204 has an upper surface 206 and a lower surface 208. A hole 210 extends from the upper surface 206 to the lower surface 208. The hole 210 is adapted to receive an upstanding bottom grommet fastener 408, which is part of a carpet affixation bottom unit 412. In this embodiment the carpet affixation bottom unit 412 includes the bottom grommet 406 and the affixation device 400. The bottom grommet 406 is adapted to receive the upstanding fastener or knob 402 of the affixation device 400. Fastener 402 is similar in form to fastener 202 but may have a smaller diameter. The bottom grommet 406 snaps onto the fastener 402 and is securely attached via the fastener annular ring 404. A top grommet 202 connects to the carpet affixation bottom unit 412 by snapping onto the bottom grommet fastener 408. The top grommet 202 is securely attached to the bottom grommet 406 via a radially outwardly extending annular ring 410 on the bottom grommet fastener 408. In the illustrated embodiment the vehicle floor cover 204 is a mat but the vehicle floor cover may also be a three dimensional floor tray or any other vehicle floor cover for use in a vehicle foot well.

FIGURE 5 illustrates a cross sectional view of the grommet 202 connected to the bottom grommet 406 and the fastener 402. The grommet 202 has a top portion 304 that extends radially beyond the annular ring 404 of the bottom grommet fastener 408 and, in this illustrated embodiment, completely covers the floor cover hole 210. The top portion 304 of the grommet 202 has a lower surface 306.

In operation, a bottom grommet 406 is snapped onto the fastener 402. The bottom grommet has an inner wall 506 that is connected at its top end to a bottom grommet outer wall 507. Bottom grommet inner wall 506 terminates at its lower end with a radially inwardly extending engagement ridge 502. The vertical displacement of engagement ridge 502 from the top end of inner wall 506 permits it to flex away from and toward the device axis. Engagement ridge 502 therefore can snap over the annular ring 404 of the fastener 402. The bottom grommet fastener 408 is inserted into the hole 210 of the vehicle floor cover 204. The bottom grommet fastener 408 has an annular ring 410 over which the engagement ridge 302 of the top grommet 202 snaps.

Alternatively, the top grommet 202 is assembled to the bottom grommet 406 with the floor cover 204 positioned between them. Then, the affixation device 400 is snapped to the bottom grommet 406. This sequence of assembly permits the retention device 400 to be attached to a previously grommeted mat set, as would be the case for a field retrofit.

The vehicle floor cover 204 is positioned in between the lower surface 306 of the grommet 202 and the top face 504 of the bottom grommet 406. Affixation device 400 has downwardly extending projections or spikes 508 which are similar to spikes 106 as above described. Also, as described above, the projections 508 extend through the carpet pile 312 but are sized so as not to extend through the carpet backing 314 of the vehicle foot well carpeting 310.

Retention devices according to the invention may be furnished to the consumer in a condition in which the projections or spikes 106 are pressed into blocks of cardboard, melt-blown polystyrene or the like. These protective blocks prevent injury to the user's hands and prevent damage to the spikes 106, 508. The blocks (not shown) would be removed immediately prior to the mat or tray being affixed to the vehicle foot well.

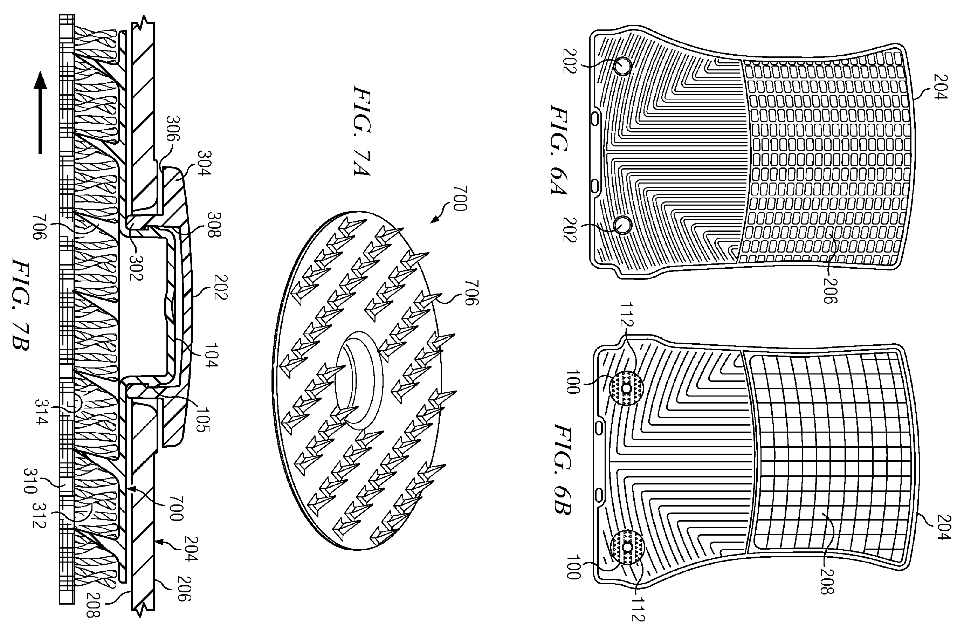

FIGURES 6A and 6B illustrate a representative vehicle floor cover 204, a mat in this instance, with the top grommet 202 and device 100 fastened together. FIGURE 6A illustrates the top surface 206 of the vehicle floor cover 204 where the top grommet 202 is visible. FIGURE 6B illustrates the bottom surface 208 of the vehicle floor cover 204 where the lower surface 112 of the device 100 is visible.

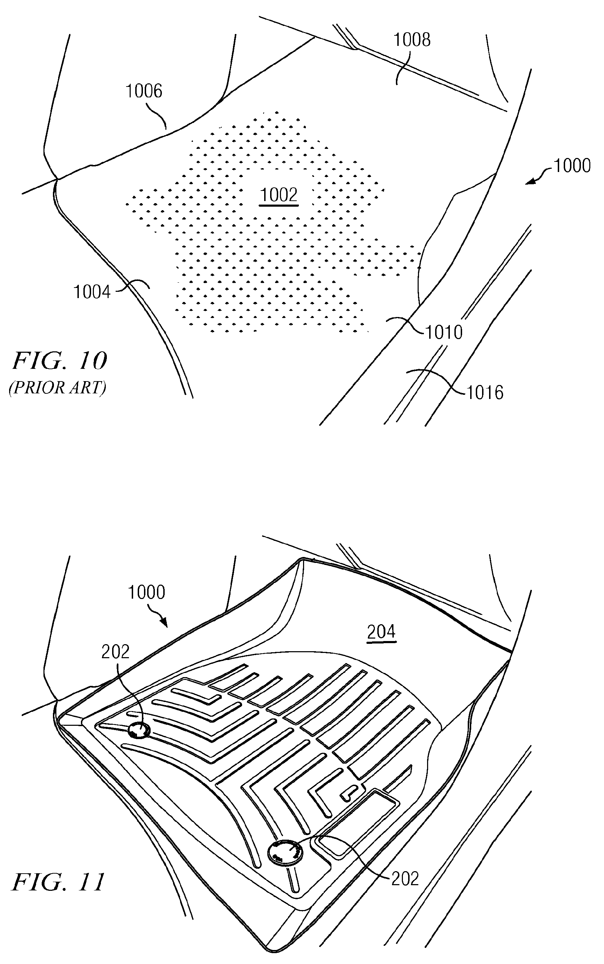

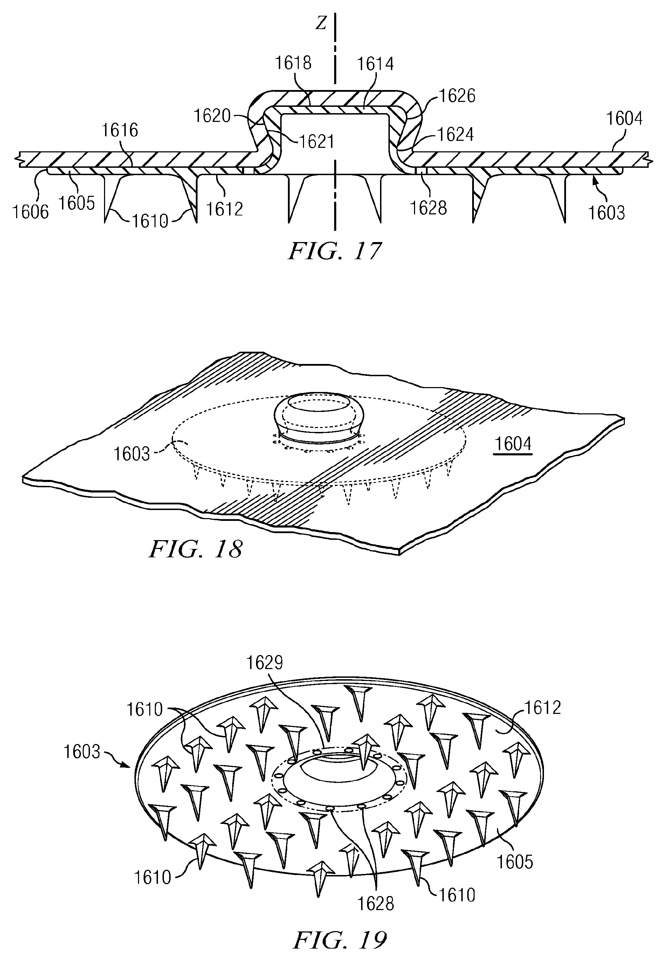

FIGURE 7A illustrates an alternative embodiment 700 of the device where the projections or spikes 706 do not have a vertical face aligned with the axis. This second embodiment of the device may be used in embodiments where the top grommet 202 attaches to the knob or fastener 104 as shown in FIGURE 7B. It may also be used in embodiments where the bottom grommet attaches to the fastener (not illustrated), and may be used with embodiments in which the upstanding device knob is joined to the floor cover by thermoforming (*see* FIGUREs 17 and 18). In using the embodiment illustrated in FIGUREs 7A and 7B, the device 700 must be oriented such that the projections 706 are angled toward the front of the vehicle and away from the seat pedestal 804, 1004 (FIGUREs 8 and 10).

FIGURE 7B illustrates a cross sectional view of the top grommet 202 connected to the fastener or knob 104 of the device 700. The grommet 202 has a top portion 304 that extends radially beyond the annular ring 105 of the fastener 104. The top portion 304 of the grommet 202 has a lower surface 306. The vehicle floor cover is captured between the lower surface of the grommet 306 and the affixation device 700. The projections 706 extend through the carpet pile 312 but are sized so as not to extend through the carpet backing 314 of the vehicle foot well carpeting 310. As unrestrained, floor mats or trays have a tendency to be kicked forward by an occupant's feet, and in response they will wrinkle or ride up onto the vehicle firewall. As installed with the projections 706 facing forward in the direction of the arrow shown in FIGURE 7B, the projections 706 will resist this forward shear force and will bite further into the carpet pile.

FIGURE 8 shows a typical original equipment manufacturer (OEM) driver's side vehicle foot well 800 prior to a floor mat or tray being placed within it. Typically the floor 802 of the foot well 800 is carpeted. The floor 802 of the foot well 800 may be bounded by other foot well surfaces, so as to form a generally concave shape. These bounding foot well surfaces may include a rear or aft side 804 transitioning the floor 802 to a seat pedestal (not shown); an inboard side 806, which will be disposed between the floor 802 and a transmission tunnel or center console; a firewall 808 which is a forward continuation of floor 802 and which generally slopes upwardly and forwardly, and forward of the gas and brake pedals 810 and 812, and an outboard side 814 which is disposed between the foot well floor 802 and a door sill 816.

Particularly on the driver's side, vehicle manufacturers now usually (but not always) equip the floor well 800 with one or two hold-down or retention devices, to fix the vehicle floor cover in place and prevent its shifting and interfering with the gas pedal 810 and/or brake pedal 812. In this illustrated embodiment there are two OEM retention devices 818A and 818B and they take the form of posts with enlarged heads 820. In the illustrated embodiment, the OEM posts 818A and B are meant to be inserted entirely through respective holes in the OEM floor mat (not shown).

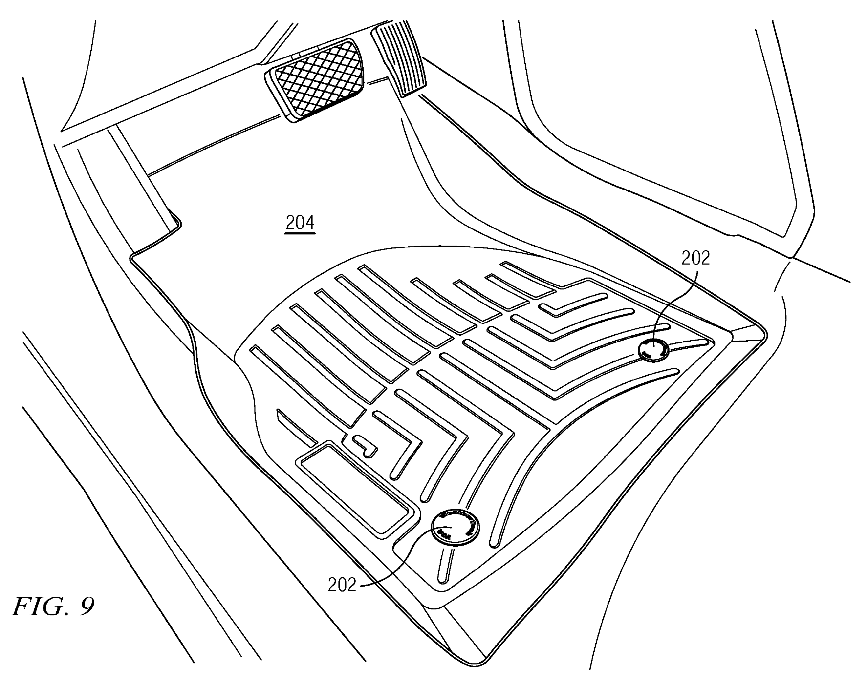

FIGURE 9 shows a vehicle floor tray 204 installed in the driver's side vehicle foot well 800. The OEM retention devices 818 A and B were inserted entirely through the holes 210 in the floor tray 204. Two top grommets 202 are installed to affix the mat 204 to the retention devices 818 A and B.

FIGURE 10 illustrates a passenger's side vehicle foot well 1000. Like the driver's side foot well, the floor 1002 of the foot well 1000 may be bounded by other foot well surfaces, so as to form a generally concave shape. These bounding foot well surfaces may include a rear or aft side 1004 transitioning the floor 1002 to a seat pedestal (not shown); an inboard side 1006, which will be disposed between the floor 1002 and a transmission tunnel or center console; a firewall 1008, which is a forward continuation of floor 1002 and which generally slopes upwardly and forwardly, and an outboard side 1010 which is disposed between the foot well floor 1002 and a door sill 1016. Note that in the illustrated model, there are no OEM retention devices in the passenger side foot well 1000. Manufacturer-provided retention devices also may be missing from the second or third row foot wells, and/or may be missing from a carpeted cargo area to the rear of the last passenger row.

FIGURE 11 illustrates a passenger side vehicle floor tray 204 installed in the passenger side vehicle foot well 1000. The top grommets 202 are attached to respective fasteners 104 of affixation devices 100 (not visible in this view). In FIGURES 8-11, the driver's side foot well is positioned on the left side of the vehicle and the passenger's side foot well is positioned on the right side of the vehicle. This would be the case for North American and Continental European vehicles. For countries having vehicles in which the driver's side is on the right hand side (e.g. the UK, Australia and Japan) the relative positions of the driver's side and the passenger's side will be reversed.

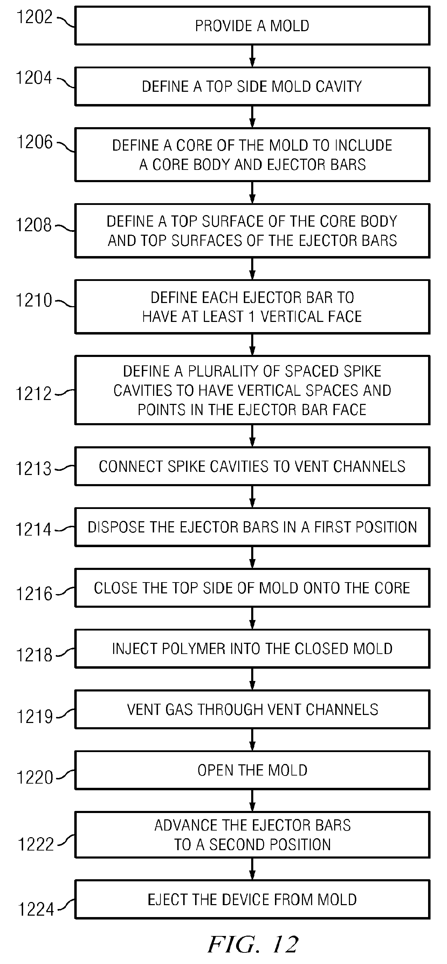

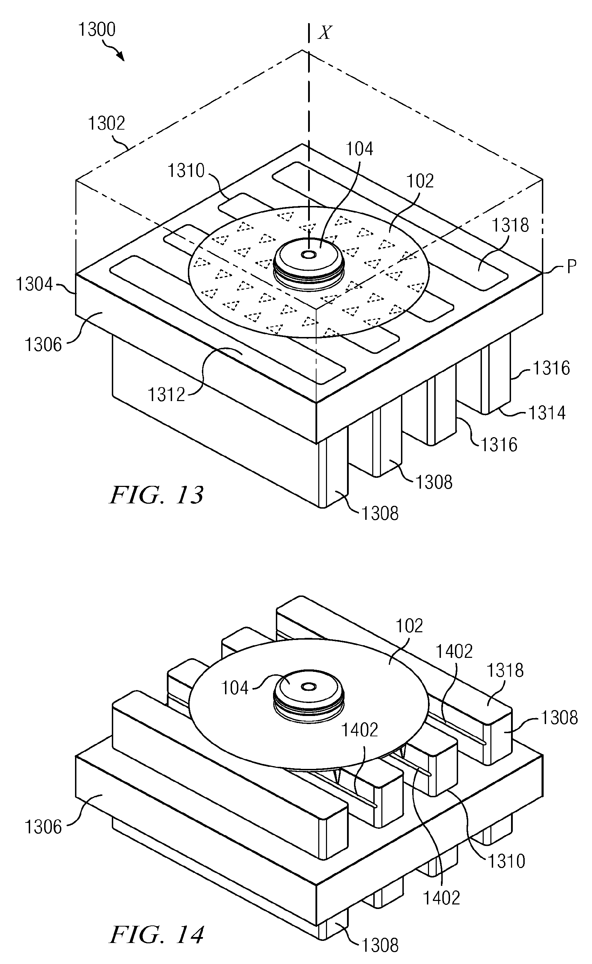

FIGUREs 12 through 15 provide an overview of one process for manufacturing a device 100 for affixing a vehicle floor cover 204 to carpeting of a vehicle foot well according to the invention. At step 1202 an injection mold 1300 (FIGURE 13) is provided. The mold 1300 has a top side 1302 and a core side 1304; a plane P splits the top side 1302 from the core side 1304. In step 1204, the top side 1302 of the mold cavity is defined. The top side mold cavity 1302 molds the second upper face 102 of the device 100 in the plane P and a fastener or knob 104 to upwardly extend from the second face 102 along an axis X.

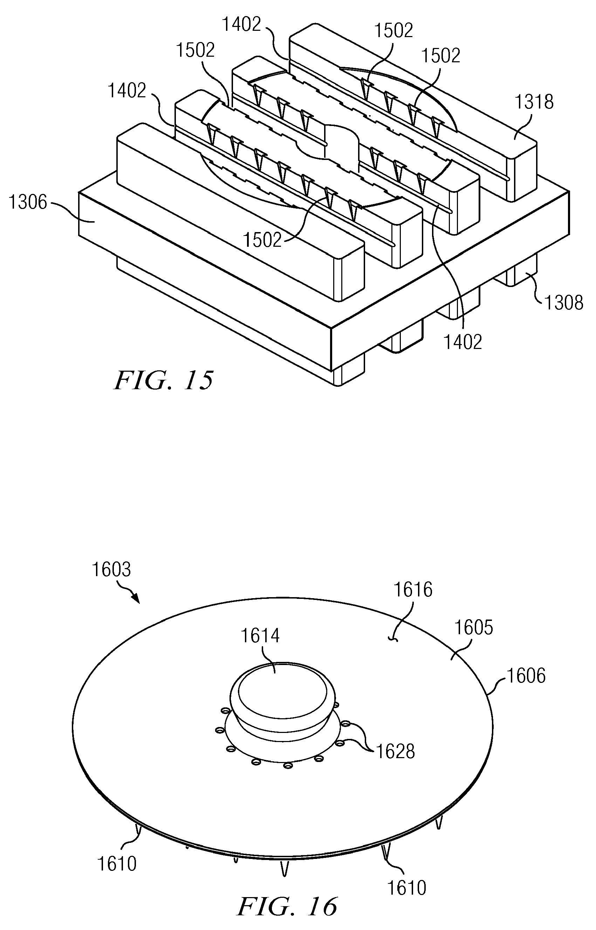

At step 1206 the core 1304 of the mold 1300 is defined to include a core body 1306 and a plurality of spaced-apart parallel ejector bars 1308, each of the ejector bars 1308 being slidable within respective channels 1310 of the core body 1306 in alignment with the axis. The top surface 1312 of the core body 1306 and top surfaces of the ejector bars 1318 are defined in step 1208. Each of the ejector bars 1308 has at least one vertical face 1316 (step 1210), and most ejector bars have two such faces 1316 which will bound spike cavities 1502. As shown in FIGURE 16, along each vertical face 1316, a plurality of spaced-apart spike cavities 1502 downwardly extend from the top surface of the plane P (step 1212). In some embodiments, such as the embodiment illustrated in FIGURE 15, at least the interior ones of the ejector bars 1308 may have spike cavities 1502 on a first and a second, opposed vertical face. The spaced-apart spike cavities 1502 terminate in respective apices or points. In some embodiments the apices in each row may connect to a vent channel 1402 (step 1213), permitting gas to escape and insuring that the apices of the spike cavities 1502 become completely filled with polymer.

In step 1214, when the device 100 is being molded, the ejector bars 1308 are positioned such that the top surfaces 1318 of the ejector bars are coplanar with the top surface of the core body 1312, as is shown in FIGURE 13. The top side 1302 of the mold 1300 is closed onto the core 1304 in step 1216.

Once the mold is closed, polymer is injected into the closed mold to form the first face 112, the second face 102, the fastener or knob 104 and the spikes 106 (step 1218). Gas is vented through the vent channels in step 1219. The mold 1300 is then opened in step 1220. The next step (1222) is to advance the ejector bars 1308 from the first position where the top surface 1318 of the ejector bars are coplanar with the top surface of the core body 1312, to a second position where the top surfaces of the ejector bars 1318 are above the top surface of the core body 1312, as is shown in FIGURE 14. In step 1224 the device 100 is ejected from the device mold 1300.

FIGURES 16-21 illustrate an embodiment of the invention in which the retention device, indicated generally at 1603, is directly attached to a floor cover 1604 during the course of its manufacture. The device has a thin, flat base 1605 with an outer margin 1606. A plurality of projections or spikes 1610 extend downwardly from a lower surface 1612 of the base 1605, as before. A knob 1614 extends upwardly from an upper surface 1616 of the base 1605.

The device 1603 is attached to the floor cover 1604 (which may be a floor mat or floor tray) during a process of thermoforming the floor cover 1604 from a flat blank of thermoplastic material having a substantially uniform thickness. A height of the knob 1614 from its top surface 1618 to the base upper surface 1616 must be at least twice, and preferably is at least three times, the thickness of the blank used to thermoform the floor cover 1604, to permit the blank to conform to the external sidewall surface 1620 of the knob 1614 during thermoforming.

Knob 1614 is shaped such that the external sidewall surface 1620 is flared radially outwardly at or near its top surface 1618, making a flared portion 1626, and is then relatively constricted as its junction with base top surface 1616 is approached. In the embodiment shown, the knob 1614 is formed to be radially symmetrical around an axis Z, but it could be otherwise. A right radius from knob surface constriction 1624 to axis Z is substantially less than a right radius from flared portion 1626 to axis Z.

A plurality of through-holes 1628 optionally may be formed to extend from upper surface 1616 to lower surface 1612 of base 1605. The through-holes 1628 should be positioned so as to be near the junction of the external sidewall surface 1620 and upper base surface 1616. The through-holes 1628 are positioned radially inwardly from the downward projections 1610. In another embodiment (not shown), through-holes 1628 may be joined by a second set of through-holes through the knob sidewall 1629.

The through-holes 1628 are put in communication with a source of partial vacuum. One way to do this is shown in FIGURE 19. An annular channel 1632 is formed in lower surface 1612 so as to communicate to all of the through-holes 1628 and act as a common vacuum feed line.

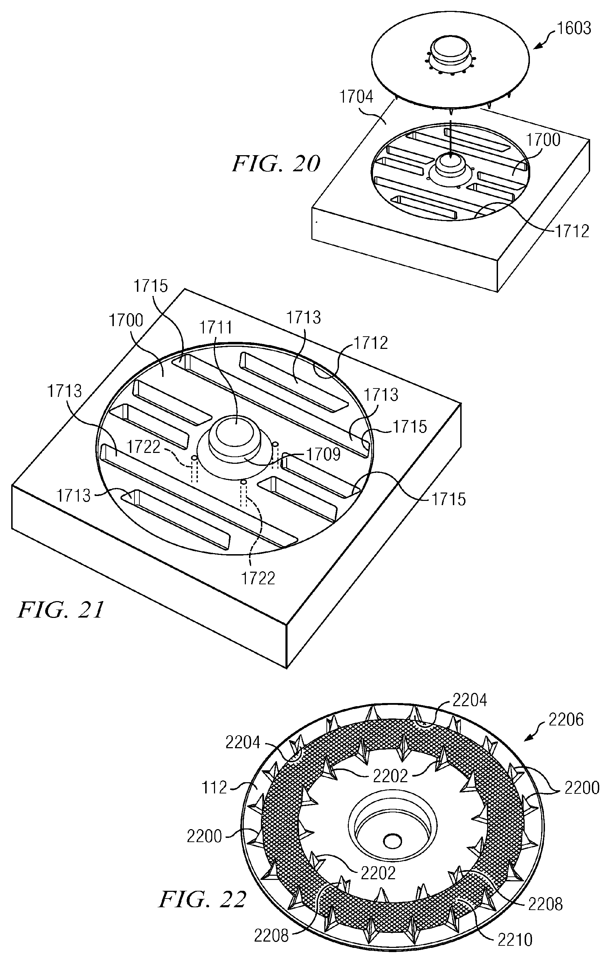

Prior to the thermoforming process, and as illustrated in FIGURE 20, a previously injection-molded retention device 1603 is placed into a device-receiving structure 1700 formed in an upper face of a female vacuum mold 1704. The receiving structure 1700 is shown in more detail in FIGURE 21. Structure 1700 has a disk-like recess 1712 with an outer margin that is shaped to closely receive the outer margin 1606 of the device base 1605. The depth of recess 1712 is selected to be the same thickness as device base 1605, so that upper surface 1616 of device 1603 will be flush with the local upper surface of the vacuum mold 1704.

Disposed radially inwardly from the recess margin are a plurality of parallel, spaced apart clearance slots 1713. The clearance slots 1713 each receive a row, or part of a row, of the spikes 1610. In the center of structure 1700 is an upstanding alignment post 1711 that fits within the interior of device knob 1614 and aids in the registration of a device 1603 with the receiving structure 1700. Particularly as terminated with angled surfaces 1715, which may be formed to mate with angled surfaces of the spikes 1610 on either end of a row, the clearance slots 1713 may be capable of orienting the device 1603 to the thermoformed mat or tray, and thence to the vehicle foot well for which the mat or tray is intended. This could be particularly important, for example, where slanted spikes or projections are used, as is shown in FIGURE 7A and 7B. For devices having slanted spikes 706 (e.g. FIGURE 7A), end surfaces 1715 could be conformably slanted.

Structure 1700 further has one or more vacuum source conduits 1722 that in use are connected a source of vacuum. The vacuum conduits 1722 can communicate with annular vacuum channel 1632 (FIGURE 19) and thence to through-holes 1628.

In operation, a device 1603 is fitted to each device receiving structure 1700 in the mold 1704; in one embodiment, there will be two such structures 1700 made for a mold for a passenger's side floor cover. However, devices 1603 may also be furnished for mats or trays that are on the first row driver's side, or for the second or third row mats or trays, or the cargo area, and wherever the corresponding foot wells/ cargo area for any of these lack OEM retention devices. A blank of thermoplastic material is heated to softening and is sucked into the mold 1704. Partial vacuum provided at the exits of through-holes 1628, or more generally, urges the soft thermoplastic material into close conformance with the external sidewall surface 1620 of the device knob 1614. Because surface 1620 is undercut, this affixes the device 1603 directly to the cover 1604 without the necessity of furnishing a grommet or cap, and avoids the necessity of making a hole in cover 1604. This prevents any problems associated with fluid leakage from the top of the mat or tray onto the carpet which it is supposed to protect.

FIGURE 22 illustrates an alternative embodiment in which the straight rows of spikes or projections are replaced with an outer annular array 2200 of spikes or projections, and an inner annular array 2202 of spikes or projections. Each of the spikes 2200 has a vertical face 2204 that faces radially inwardly to the center of device 2206. Each of the spikes 2202 has a vertical face 2208 that faces radially outwardly in respect of the center of the device 2206. Each of the vertical faces 2208 conforms to an interior cylindrical wall of an ejector sleeve, a footprint of which his shown at 2210. Each of the vertical faces 2204 likewise conform to an exterior cylindrical wall of the ejector sleeve. The use of the ejector sleeve walls in partially defining the spike cavities permits the sharp definition of the spikes or projections 2200, 2202. The annular spike arrays 2200, 2202 may be used with devices that affix to a top grommet or cap (FIGURE 3), devices that affix to a bottom grommet (FIGURE 5), or devices that are attached to a mat or tray by a thermoforming operation (FIGURE 17).

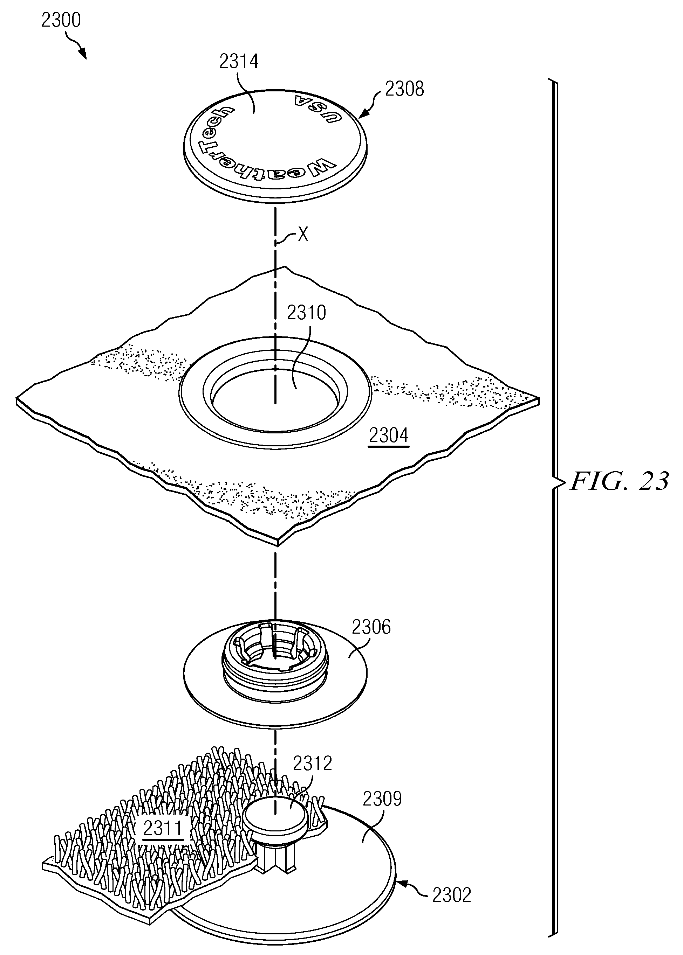

In a further embodiment of the invention, a grommet is provided that engages any of several vehicle foot well retention posts or studs. As seen in FIGURE 23, grommets according to the invention have two components: a retention or bottom grommet 2306 and a top grommet or cap 2308. A retention or bottom grommet 2306 is axially aligned with a vehicle foot well retention post or stud 2302, a portion of a vehicle floor cover 2304, and a top grommet or cap 2308. The vehicle floor cover retention stud 2302 protrudes through the original equipment manufacturer (OEM) vehicle carpet 2311 and is formed around an axis X. Axis X typically is vertical but, in some vehicle foot wells, may be canted away from the vertical. Stud or post 2302 may have an extensive base 2309 that in use is disposed underneath the OEM carpet layer 2311.

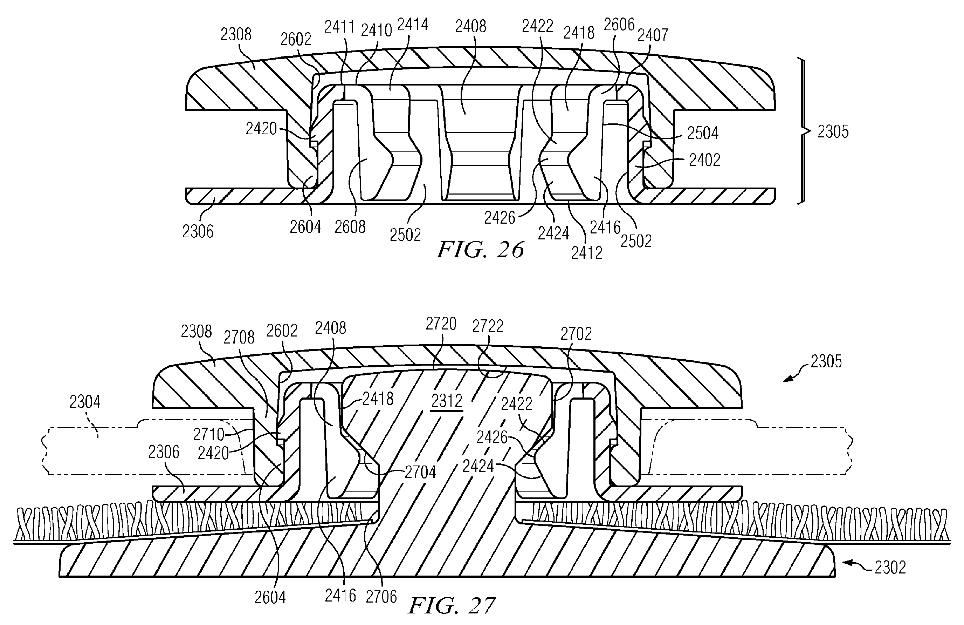

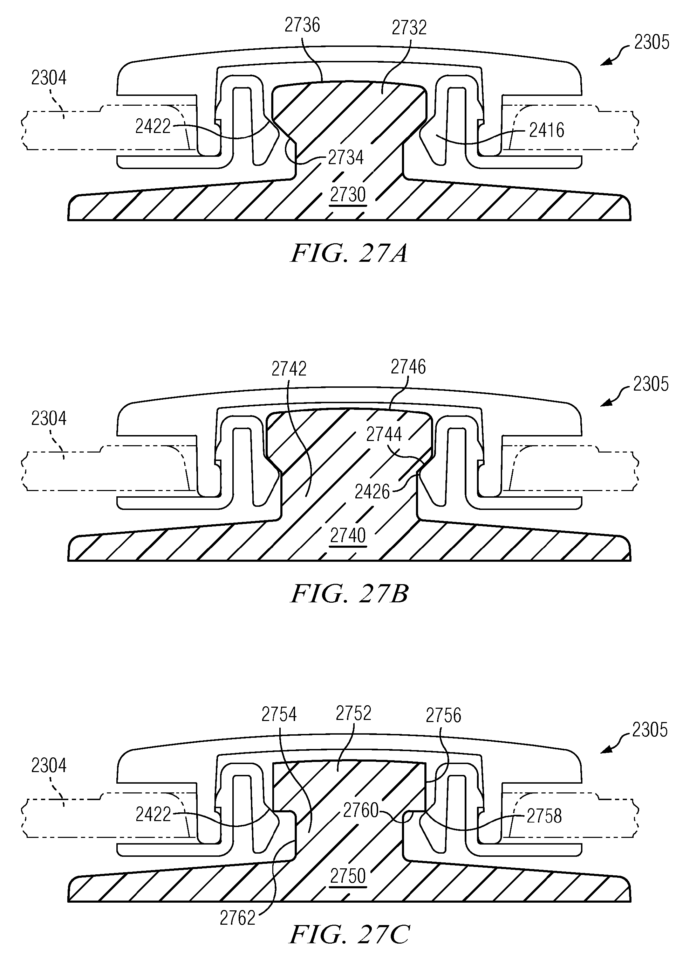

The function of the vehicle floor cover 2304 is to protect this OEM carpet or surface 2311, and provide an easy way for the vehicle owner to keep the vehicle foot well clean; the owner (or other user, or attendant) removes the vehicle floor cover, washes it off, and replaces it in the foot well. The vehicle floor cover 2304, which can be a floor mat or a floor tray, has a floor cover retention hole 2310 into which the bottom grommet 2306 protrudes from below. Often there are two laterally spaced-apart studs or posts and floor cover retention holes 2310, typically located near the aft outboard and aft inboard corners of the foot well and floor cover, but only a representative one of them is shown in FIGUREs 23 and 27 - 27C.

The bottom grommet 2306 may be integrally molded from a polymeric material, such as nylon or other suitable material. The bottom grommet 2306 engages an enlarged head 2312 of the vehicle floor cover retention stud or post 2302. The vehicle floor cover retention stud 2302 may have the shape of the stud illustrated in FIGURE 23, or may be of a myriad of other shapes depending on the make and model of the vehicle; four such shapes are shown in FIGUREs 27 - 27C, discussed below. In the illustrated embodiment, the bottom grommet 2306 extends through the floor cover retention hole 2310 and a top grommet or cap 2308 is attached to the bottom grommet 2306, as by being snapped over the bottom grommet's outer sidewall.

In the illustrated embodiments the top grommet 2308 downwardly extends through most or all of the retention hole 2310, as will be hereinafter described. The top grommet 2308 may be integrally molded from a polymeric material, such as nylon, or other suitable material. In the illustrated embodiment the top grommet 2308 has a solid top or cap 2314 that completely covers floor cover hole 2310 and bottom grommet 2306. Alternative embodiments of the top grommet 2308 may have an open top or partially open top.

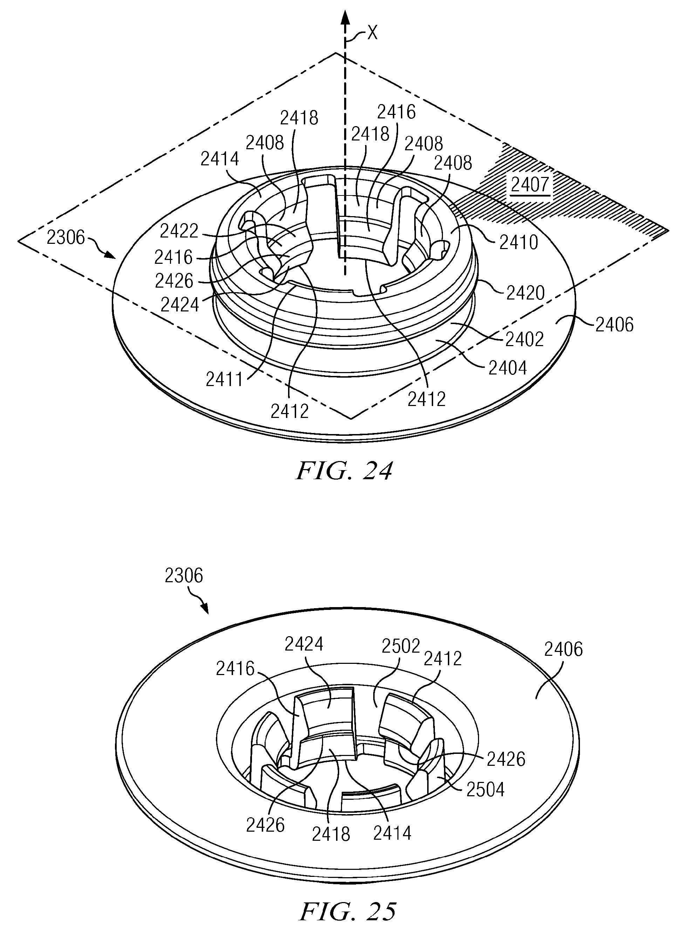

As seen in FIGURE 24, the bottom grommet 2306 has an outer sidewall 2402 with an outer surface 2404. An annular engagement ridge 2420, which can be orthogonal to axis X, extends radially outwardly from the outer surface 2404 of the bottom grommet outer sidewall 2402. A floor cover retention flange 2406 radially outwardly extends from the outer surface 2404 of the outer sidewall 2402, and is downwardly spaced from the engagement ridge 2420. The outer sidewall 2402 extends upwardly from the retention flange 2406 at least to a top or hinge plane 2407 that is orthogonal to axis X. In the illustrated embodiments the bottom grommet outer sidewall 2402 has its upper end at plane 2407, but in other embodiments the outer sidewall 2402 could continue upwardly beyond the hinge plane 2407. In operation and in this embodiment, the outer sidewall 2402 extends completely through the hole 2310 in a vehicle floor cover 2304, as shown in FIGUREs 23 and 27 - 27C.

A radially inwardly extending annulus 2410 is disposed in the hinge plane 2407 and in the illustrated embodiment is formed to be at right angles to the axis X. The annulus 2410 extends from the inner surface 2502 (*see* FIGURE 25) of the outer sidewall 2402 to an annulus inner end 2411. A plurality of angularly spaced-apart fingers 2408 are disposed around axis X, and are joined to the inner end 2411 of the annulus 2410 by their respective upper ends 2414. In this illustrated embodiment there are six fingers 2408 but other embodiments may have more or fewer fingers 2408 and the fingers 2408 may differ in angular width (relative to axis X) from the width illustrated. Further, while in the illustrated embodiment the angular width of the fingers is uniform, this does not have to be the case, and some of the fingers 2408 may have different angular widths than others.

Each finger 2408 extends axially downwardly from its upper end 2414 to a lower end 2412. Each finger 2408 has an inner sidewall surface 2418 that is in approximate alignment with axis X and may conform to an imaginary right cylinder (not shown) around axis X. Each finger 2408 flexes upon being pressed outwardly while camming past the enlarged head 2312 of the retention post 2302 (see FIGURE 27). In this embodiment, most of this flexure will occur in the vicinity of hinge plane 2407, near where the upper end 2414 of the finger 2408 and the inner end 2411 of the annulus 2410 meet.

Each finger 2408 has a bead 2416 which is close to the lower end 2412 of the finger 2408. The bead 2416 extends radially inwardly from the general inner sidewall surface 2418 of the finger 2408. The bead 2416 has an inclined surface 2422 which extends axially downwardly and radially inwardly from the inner sidewall surface 2418 of the finger 2408 to an innermost margin 2426 of the bead 2416. A lower inclined surface 2424 of bead 2416 may extend downwardly and outwardly from the innermost margin 2426 of the bead 2416 to the lower end 2412 of the finger 2408. Inclined surfaces 2422, 2424 may be frustoconical as shown, or alternatively may conform to other surfaces of rotation around axis X, or be planar. The distance between the inner sidewall surface 2418 and the innermost margin 2426 of the bead 2416 may be in the range of 1 mm to 1.75 mm, as measured along a radius which is at right angles to axis X. In the illustrated embodiment, the innermost margin 2426 of the bead 2416 extends radially inwardly approximately 1.25 mm from the inner sidewall surface 2418. The lower and upper inclined surfaces 2424, 2422 are at angles relative to the axis X. The angle of upper inclined surface 2422 may be in the range of 30 to 60 degrees. In some embodiments the angle of inclined surface 2422 may be forty-five degrees. The angle of the terminating inclined surface 2424 may be in the range of 120 to 160 degrees, and may be chosen to be 150 degrees.

The bead 2416 is adapted to engage a vehicle floor cover retention post or stud 2302 *(See* FIGUREs 23 and 27 - 27C). The bead 2416 is shaped such that it can engage vehicle floor cover retention studs 2302 of varied sizes and shapes, as will be discussed in conjunction with FIGUREs 27 - 27C. In alternative embodiments the bead 2416 may have a shape other than the one illustrated.

As seen in FIGURE 25, the outer sidewall surface 2504 of each finger 2408 is opposed to the inner sidewall surface 2418 of the finger 2408. Surface 2504 is spaced from surface 2502. The inner surface 2502 of the outer sidewall 2402 extends from the floor cover retention flange 2406 to the annulus 2410.

FIGURE 26 is a section, taken substantially along a plane that includes axis X, of the bottom grommet 2306 as attached to the top grommet or cap 2308. The top grommet 2308 has a downwardly extending sidewall 2602 from which an annular rib or latch 2604 extends radially inwardly. The annular rib 2604 of the top grommet 2308 snaps over the engagement ridge 2420 of the bottom grommet 2306. In this manner, the top grommet 2308 is secured to the bottom grommet 2306. Alternative embodiments may have other features to aid in fastening the top grommet 2308 to the bottom grommet 2306, such as snaps of shapes different from those shown, push-and-twist arrangements, or screw threads.

Each finger 2408 must have room to flex. Therefore, the radial distance ("radial" being used herein as meaning a direction at right angles to axis X) between the innermost margin 2426 of the bead 2416 and the general inner sidewall surface 2418 of finger 2408 should be less than or equal to the radial spacing between inner surface 2502 of the outer sidewall 2402 and the outer sidewall surface 2504 of finger 2408. This spacing then will be large enough to allow the complete outer radial displacement of the bead 2416 as it cams past the retention post head 2312. The radial thickness of the bead 2416 from innermost margin 2426 to the general inner sidewall surface 2418 of finger 2408 can be selected from the range of 1 to 3 mm. In some embodiments, the thickness of the bead 2416 may be 1.25 mm.

In the illustrated embodiment, each finger 2408 has two sections: a first, radial section 2606, located within hinge plane 2407, and a second, downwardly extending, axial section 2608. The first section 2606 extends radially inwardly within hinge plane 2407 until its junction with second section 2608. The second section 2608 downwardly depends from the inner end of first section 2606. Alternatively, fingers 2408 could be so formed that they depend directly downwardly from annulus 2410 without any intervening radial finger section.

FIGUREs 27 - 27C illustrate the bottom grommet 2306 and top grommet 2308 used in affixing a vehicle floor cover 2304 to each of several differently shaped vehicle retention studs 2302. As seen in Figure 5, the retention stud 2302 has an enlarged head 2312 which is the uppermost part of the stud 2302. The head 2312 has a retention stud head wall 2702 and, in the embodiment shown in FIGURE 27, has a sloped transition wall 2704. The head sits on top of a stem 2706 which is narrower in diameter than the retention stud head wall 2702.

The fingers 2408 of the bottom grommet 2306 engage the retention stud 2302. As described above, the bead 2416 of the finger 2408 has an upper inclined surface 2422 and a lower inclined surface 2424. In the illustrated embodiment, the upper inclined surface 2422 of the bead 2416 is smaller than the lower inclined surface 2424 of the bead 2416. Alternative embodiments may have fingers 2408 with beads 2416 that have different shapes and upper inclined surfaces 2422 and lower inclined surfaces 2424 that have different lengths or angles than the bead 2416 illustrated in FIGUREs 27 - 27C. Upper inclined surfaces 2422 are nonetheless large enough to offer expanded loci of contact with the surfaces of different post heads 2312. The inclined surfaces 2422 thus provide more adaptability of the grommet to different retention posts 2302.

As shown in FIGURE 27, the upper inclined surface 2422 engages the transition wall 2704 of the retention stud 2302. In this illustrated embodiment the slope of the upper inclined surface 2422 and the slope of the transition wall 2704 approximately match. In alternative embodiments the slopes may be different or may exactly match. The attachment of the bottom grommet 2306 to the retention stud 2302 is ensured when the innermost margin 2426 of the bead 2416 extends inwardly such that the inner diameter of the bottom grommet 2306 at that point is greater than the stem 2706 diameter but less than the diameter of the retention stud head wall 2702.

The slope of the lower inclined surface 2424 is determined such that the bottom grommet 2306 can cam over the retention post head 2312, and so that a user can more easily index the bottom grommet to the post head 2312. The fingers 2408 flex substantially within hinge plane 2407 when sliding over the retention post head 2312, after which the fingers 2408 elastically return to their original position or, depending on the size of the engaged retention post stem 2706, remain in a semi-flexed position.

Also as seen in each of FIGUREs 27 - 27C, the cap 2308 has a downwardly depending sidewall 2708 with an outer sidewall surface 2710. This outer sidewall surface 2710 fits within floor cover hole 2710 and is the portion of the grommet 2705 that bounds the hole 2710.

FIGURE 27 shows a retention post or stud 2302 with a first profile. A top 2720 of the retention post is near a bottom surface 2722 of the cap 2308. The retention post head wall 2702 is close to the general inner sidewall surface 2418 of the fingers 2408. The angle of the transition wall 2704 approximately matches that of inclined surface 2422, and is about twice as long. The diameter of stem 2706 is considerably less than the inner diameter of bottom grommet 2306 as measured across the innermost bead margins 2426.

FIGURE 27A shows grommet 2305 as affixing a vehicle floor cover 2304 to a retention post 2730 that has a profile that is different from retention post 2302. The diameter of the enlarged head 2732 of the post 2730 is smaller than that of post 2302. The inclined surface 2422 of the bead 2416 is nonetheless long enough to engage post inclined wall 2734 in an interference fit. A top wall 2736 of the post 2730 is also not as high as the top wall 2720 of retention post 2302.

In FIGURE 27B, a retention post 2740 is seen that has a significantly thicker stem 2742. The diameter of stem 2742 is about the same as the bottom grommet minimum inner diameter measured across innermost bead margins 2426. Grommet 2305 can even accommodate posts with stems that are thicker than this, so long as there is a significant difference in the diameter of the post head and that of the post stem. The position of sloped sidewall 2744 and top wall 2746 are similar to those for retention post 2302.

The retention post 2750 seen in FIGURE 27C has no inclined transition wall between its head 2752 and its stem 2754. Instead, the vertical wall 2756 of the head 2752 terminates at an abrupt corner 2758. A horizontal surface 2760 extends from this corner 2758 to a sidewall 2762 of the post stem 2754. The inclined surface 2422 engages with corner 2758 to retain the floor cover 2304 on the post 2750. The inclined surface 2422 is extensive enough that it can snap past lower post head corners at various positions, and still retain the grommeted floor cover on the post.

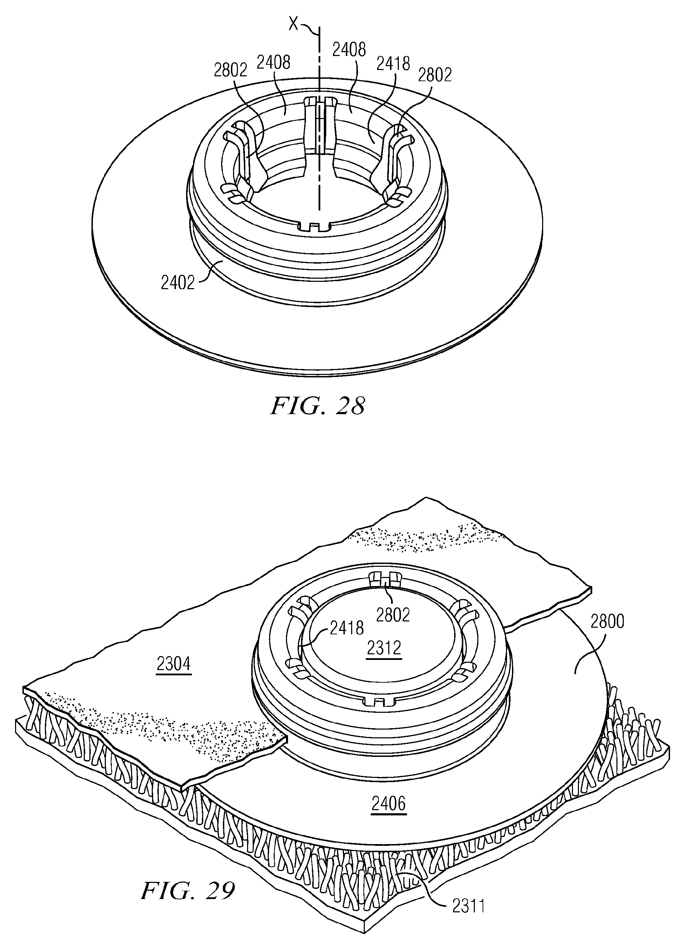

FIGURE 28 illustrates a further embodiment 2800 of the bottom grommet. In this embodiment, relatively small (in terms of their angular width relative to axis X) guide ribs 2802 are interleaved between the fingers 2408. In this embodiment there is one small guide rib 2802 between each pair of adjacent fingers 2408 but alternative embodiments may have guide ribs 2802 in fewer spaces and the guide ribs 2802 may have widths and heights different from those shown. Specifically alternative embodiments may have three guide ribs 2802 interleaved between a subset of the fingers 2408. The guide ribs 2802 are elongate and aligned with axis X, and are attached along their outer axial ends to the inner surface 2502 of the outer sidewall 2402. The general inner sidewall surfaces 2418 of the fingers 2408 each conform to an imaginary cylinder, which is slightly larger than the diameter of the largest post head 2312 that the bottom grommet 2306 is designed to receive, as shown in FIGURE 29. The guide or support ribs 2802 extend radially inwardly to stop at this same imaginary cylinder. The guide ribs 2802 are not designed to flex, and they therefore are more resistant to the lateral displacement of the floor cover 2304 (and of the bottom grommet 2306 installed therein) relative to the retention post head 2312.

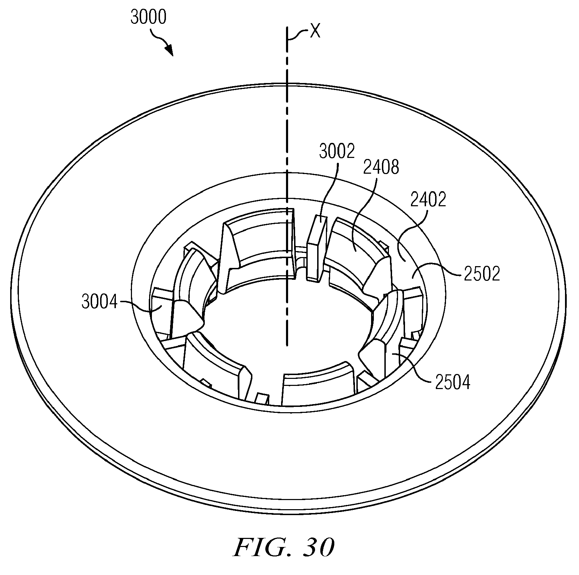

A further embodiment 3000 of a bottom grommet is illustrated in FIGURE 30. As shown, the bottom grommet 3000 has small guide ribs 3002 and small cross ribs 3004. Each cross rib 3004 extends from the inner surface 2502 of the outer sidewall 2402 to the outer sidewall surface 2504 of the respective finger 2408. An angular width of each cross rib 3004 (relative to axis X) is much smaller than the angular width of the finger 2408 that it supports. For example, the angular width of the cross rib 3004 can be one-fourth or less of the angular width of the finger 2408. Each cross rib downwardly depends from annulus 2410 (not shown; see FIGURE 26) for a predetermined distance that may be less than the axial length of the finger 2408 that it supports. The cross ribs 3004 are behind each finger 2408 to increase flex strength and help provide lateral support against the head of the vehicle floor cover retention stud 2302. In this embodiment there is one small guide rib 3002 in between each finger and one cross rib 3004 behind each finger 2408 but alternative embodiments may have guide ribs 3002 and cross ribs 3004 in fewer spaces and the guide ribs 3002 and cross ribs 3004 may have varied widths and heights or ones different from those shown.

In the embodiment shown in FIGURE 30, the fingers 2408 will flex around a post head 2312 in a way that is different than the flexure of the embodiments described above. As the fingers 2408 cam over the post head 2312, they will have more of a tendency to radially outwardly displace or stretch as a unit and will hingedly flex less. Such hinged flexure as does occur will more be more be likely to occur along that length of the finger 2408 that is not supported or braced by a cross rib 3004. Otherwise, the fingers 2408 will expand as a combined hoop and thus the hoop strength of the outer sidewall 2402 comes more into play. Each cross rib 3004 can also be made thin enough that it will bow or tangentially displace under radial force imparted by the post head, allowing more of a hinged flexure of the finger 2408 that it supports.

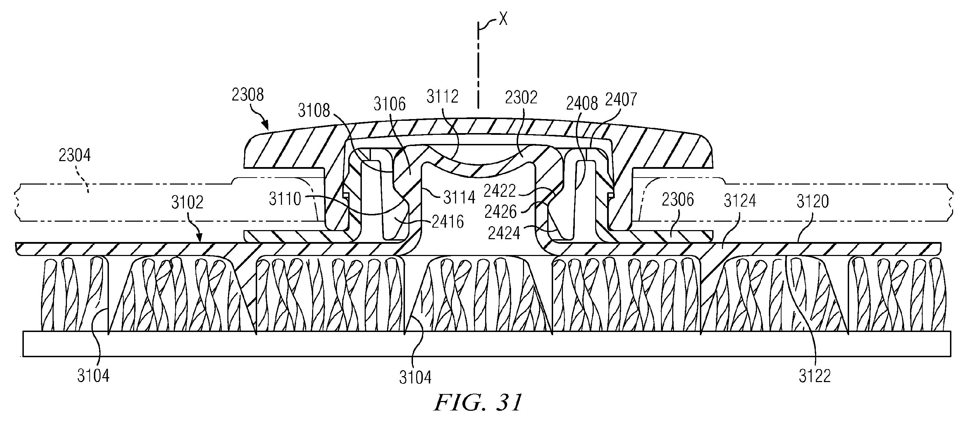

In the embodiment shown in FIGURE 31, a bottom grommet 2306 and top grommet 2308 are assembled to clad a hole in a floor cover 2304, and snapped over the post or stud 2302 of a vehicle carpet affixation device 3102. The affixation device 3102 has a body 3124 that may be formed of nylon or another suitable polymer compound. The device 3102 has a first, lower face 3122 and a second, upper face 3120, both planar and substantially at right angles to axis X. The body 3124 is thin, relative to the entire height of the affixation device 3102, and flat, and may have a circular, square, rectangular, or hexagonal marginal shape or any other shape which produces commercially acceptable results. In the illustrated embodiment the lateral margin of the device body 3124 is spaced from axis X by a radius which is many times that of the radius of head wall 3108 or stem 3114.

Many projections 3104 downwardly extend from the first face 3122 in parallel with the axis X. In this embodiment, the projections 3104 are arranged in linear rows and have a triangular base and are pyramidal in shape. The projections 3104 in the illustrated embodiment are spikes. Other embodiments may have projections that are different shapes and/or have bases of different shapes, such that the projections are substantially circular cones or rectangular pyramids. The projections 3104 bite into the pile of the carpeting of the foot well floor which prevents the device 3102, and the grommets 2306, 2308 and floor cover 2304 attached to it, from moving.

As seen in FIGURE 31, the affixation device 3102 has a horizontally enlarged head 3106. In this embodiment the enlarged head 3106 has an upwardly concave top 3112, chosen for moldability. Other embodiments may have flat tops or hollow tops. The head 3106 has a head wall 3108 that is circularly cylindrical and centered on axis X. The head 3106 sits on top of a cylindrical stem 3114 which is narrower in diameter than the head wall 3108. In this embodiment, a sloped frustoconical transition surface or wall 3110 proceeds upwardly and outwardly from an upper end of the outer surface of stem 3114 to a lower end of the head wall 3108.

The fingers 2408 of the bottom grommet 2306 engage the retention stud 2302. As described above, the bead 2416 of each finger 2408 has an upper inclined surface 2422 and a lower inclined surface 2424. In the illustrated embodiment, the upper inclined surface 2422 of the bead 2416 is smaller than the lower inclined surface 2424 of the bead 2416. Lower inclined surface 2424 may be oriented at about 150 degrees from axis X. Upper inclined surface 2422 may be oriented at about 45 degrees from axis X. Alternative embodiments may have fingers 2408 with beads 2416 that have different shapes and upper inclined surfaces 2422 and lower inclined surfaces 2424 that have different lengths or angles. As illustrated in FIGURE 31, the upper inclined surface 2422 engages with the affixation device head 3106.

As shown in FIGURE 31, the upper inclined surface 2422 engages the transition wall 3110 of the affixation device 3102. In this illustrated embodiment the slope of the upper inclined surface 2422 and the slope of the transition wall 3110 at least approximately match. In alternative embodiments the slopes may be different. The attachment of the bottom grommet 2306 to the retention stud 2302 is ensured when the innermost margin 2426 of the bead 2416 extends inwardly such that the inner diameter of the bottom grommet 2306 at that point is greater than the stem 3114 diameter but less than the diameter of the retention stud head wall 3108.

The slope of the lower inclined surface 2424 is determined such that the bottom grommet 2306 can cam over the retention post head 3106, and so that a user can more easily index the bottom grommet to the post head 3106. The fingers 2408 flex substantially at horizontal hinge plane 2407 when sliding over the retention post head 2312, after which the fingers 2408 elastically return to their original position or, depending on the size of the engaged retention post stem 3114, remain in a semi-flexed position.

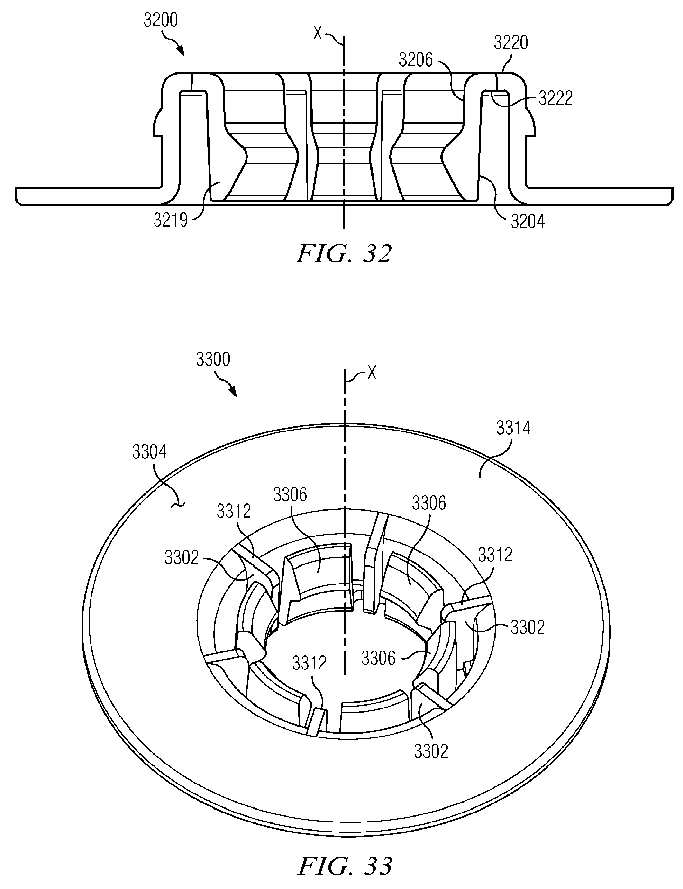

A further embodiment 3200 of a bottom grommet is illustrated in FIGURE 32. In the embodiment shown in FIGURE 32, the fingers 3219 are thicker than in the embodiments illustrated in FIGUREs 23 - 31; the fingers have a greater distance between the inner sidewall surface 3206 and the outer sidewall surface 3204. In addition, each finger is thicker between the top or hinge plane 3220 and the uppermost inner surface 3222. The additional material added to the fingers 3219 will increase the thickness and strength of the fingers 3219, will decrease their displacement under any force acting radially, and will increase their stiffness or spring constant. While the embodiment in FIGURE 32 shows the fingers 3219 without being interleaved with centering ribs, interleaving centering ribs could also be provided in a manner similar to that shown for FIGURE 33 described below.

In FIGURE 33 the bottom grommet 3300 has six centering ribs 3302. Other embodiments may have a different number of centering ribs 3302. The centering ribs 3302 are positioned between adjacent ones of the fingers 3306. In the illustrated embodiment there is a single centering rib 3302 in between each adjacent pair of fingers 3306. Other embodiments may have a different number of centering ribs 3302. The positioning of the centering ribs 3302 protects the fingers 3306 from breakage when attaching the bottom grommet 3300 to a vehicle floor cover retention post or stud 2302 (see FIGURE 23). The post (2312 in FIGURE 23) can slide along the centering ribs 3302 during consumer installation. A bottom edge 3312 of each centering rib 3302 can terminate in the horizontal plane occupied by a lower surface 3304 of the bottom grommet flange 3314.

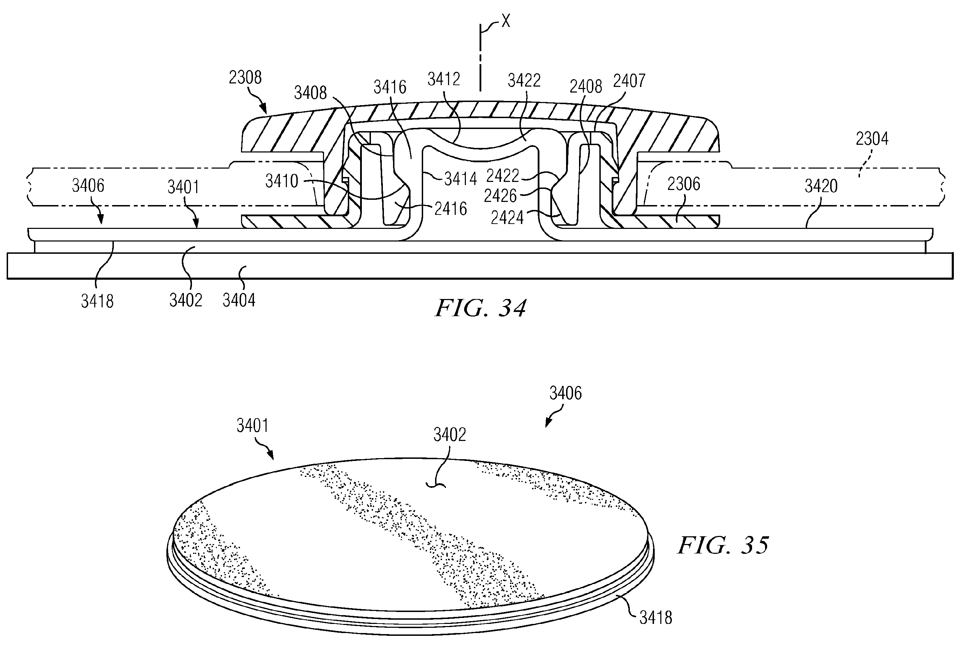

In the embodiment shown in FIGURE 34, a bottom grommet 2306 and top grommet 2308 are assembled to clad a hole in a floor cover 2304, and snapped over the head or stud 2302 of a vehicle carpet affixation device 3401. The affixation device 3401 has a body 3406 that may be formed of nylon or another suitable polymer compound. The device 3401 has a first, lower face 3418 and a second, upper face 3420, both planar and substantially at right angles to axis X. The body 3406 is thin, relative to the entire height of the affixation device 3401, and flat, and may have a circular, square, rectangular, or hexagonal marginal shape or any other shape which produces commercially acceptable results. In the illustrated embodiment the lateral margin of the device body 3406 is spaced from axis X by a radius which is many times that of the radius of head wall 3408 or stem 3414.

The affixation device 3401 illustrated in FIGURE 34 is used on non-carpeted vehicle foot wells 3404 such as ones finished in vinyl or painted metal. The affixation device 3401 (see FIGURE 35) has an adhesive layer 3402 that is attached to the lower face 3418 of the affixation device body 3406. In the illustrated embodiment the adhesive layer 3402 has a smaller diameter than the affixation device body 3406 but other embodiments may have an adhesive layer 3402 that has an identical diameter as the affixation device body 3406 or a different shape or diameter than illustrated. Adhesive layer 3402 may be constituted by a foam core having opposed adhesive surfaces, and a bottom surface of the adhesive layer 3402 may be protected by a peel-off release layer (not shown) prior to its adhesion by a consumer or user to a top smooth surface of vehicle foot well 3404.

As seen in FIGURE 34, the affixation device 3401 has a horizontally enlarged head 3416. In this embodiment the enlarged head 3416 has an upwardly concave top 3412, chosen for moldability. Other embodiments may have flat tops or hollow tops. The head 3416 has a head wall 3408 that is circularly cylindrical and centered on axis X. The head 3416 sits on top of a cylindrical stem 3414 which is narrower in outer diameter than the head wall 3408. In this embodiment, a sloped frustoconical transition surface or wall 3410 proceeds upwardly and outwardly from an upper end of the outer surface of stem 3414 to a lower end of the head wall 3408.

The fingers 2408 of the bottom grommet 2306 engage the retention stud or post 3422. As described above, the bead 2416 of each finger 2408 has an upper inclined surface 2422 and a lower inclined surface 2424. In the illustrated embodiment, the upper inclined surface 2422 of the bead 2416 is smaller than the lower inclined surface 2424 of the bead 2416. Lower inclined surface 2424 may be oriented at about 150 degrees from axis X. Upper inclined surface 2422 may be oriented at about 45 degrees from axis X. Alternative embodiments may have fingers 2408 with beads 2416 that have different shapes and upper inclined surfaces 2422 and lower inclined surfaces 2424 that have different lengths or angles. As illustrated in FIGURE 34, the upper inclined surface 2422 engages with the affixation device head 3416.

As shown in FIGURE 34, the upper inclined surface 2422 engages the transition wall 3410 of the affixation device post 3422. In this illustrated embodiment the slope of the upper inclined surface 2422 and the slope of the transition wall 3410 at least approximately match. In alternative embodiments the slopes may be different. The attachment of the bottom grommet 2306 to the retention stud 3422 is ensured when the innermost margin 2426 of the bead 2416 extends inwardly such that the inner diameter of the bottom grommet 2306 at that point is greater than the stem 3414 diameter but less than the diameter of the retention stud head wall 3408.

The slope of the lower inclined surface 2424 is determined such that the bottom grommet 2306 can cam over the retention post head 3416, and so that a user can more easily index the bottom grommet to the post head 3416. The fingers 2408 flex substantially at horizontal hinge plane 2407 when sliding over the retention post head 2312, after which the fingers 2408 elastically return to their original position or, depending on the size of the engaged retention post stem 3414, remain in a semi-flexed position. Affixation device 3401 may be used with any combination of bottom and top grommets illustrated or described herein.

FIGURE 35 illustrates the adhesive layer 3402 on the lower face 3418 of the affixation body 3406. The adhesive layer 3402 almost completely covers the lower face 3418 in this embodiment. Other embodiments may have adhesive layers 3402 of different dimensions or shapes as long as they produce commercially acceptable results.

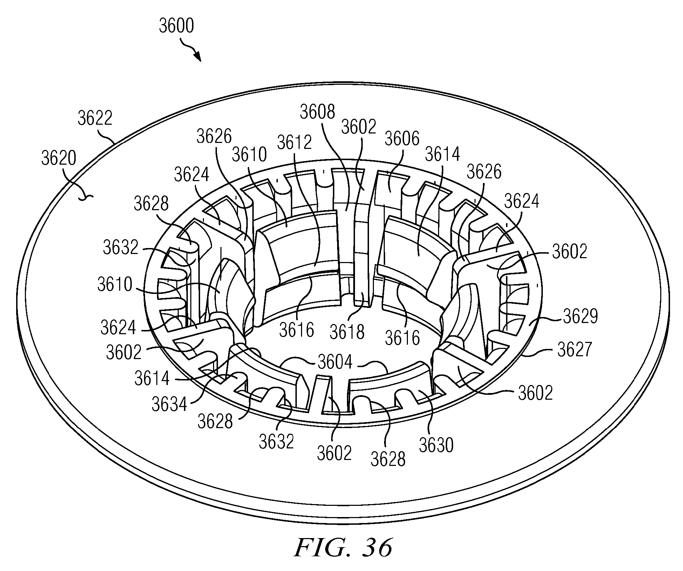

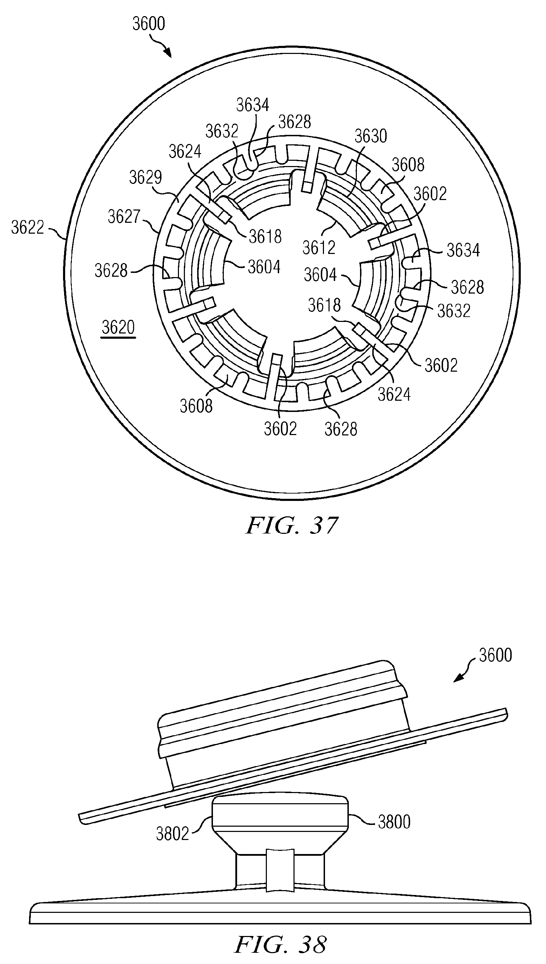

A bottom grommet 3600 is shown in FIGUREs 36 and 37 that may be used with any of the top grommets and affixation devices above described. The grommet 3600 preferably is molded as a single piece. Similar to the embodiment shown in FIGURE 33, a centering rib 3602 is disposed in between each pair of fingers 3604. Each centering rib 3602 is vertically aligned with the axis of the grommet 3600. A thickness of each centering rib 3602 is less than the radial spacing between adjacent fingers 3604. Each centering rib 3602 is integrally molded with the outer sidewall 3606 of the bottom grommet 3600, so as to radially inwardly extend from the inner cylindrical surface 3608 of the grommet sidewall 3606.

Fingers 3604 are similar to fingers 3306 as seen in FIGURE 33. Each finger 3604 terminates in a bead 3610 that has a radial inner margin 3612. Each bead 3610 has a pair of inclined surfaces 3614 and 3616 that are similar to inclined surfaces 3208, 3212 described in conjunction with FIGURE 32. Each centering rib 3602 has an inner vertical surface or margin 3618 that is disposed on an imaginary cylindrical surface spaced radially inwardly from surface 3608 of grommet sidewall 3606, but disposed radially outwardly from the position of the bead inner vertical surfaces 3612 that they occupy in an unflexed condition. Axially, each centering rib 3602 can extend from the plane occupied by lower surface 3620 of bottom grommet flange 3622, to the top end of the grommet sidewall 3606. A lower surface 3624 of each centering rib 3602 may be joined to the inner vertical surface 3618 thereof through a curved transition 3626. Instead of terminating at the plane occupied by lower surface 3620, each surface 3624 may instead terminate at the lower surface 3627 of a ring 3629, where surface 3627 occupies a plane below bottom surface 3620.

Each finger 3604 has associated therewith one or more guard ribs 3628 that are disposed radially outwardly from an outer cylindrical sidewall 3630 of the finger 3604. Each guard rib 3628 projects radially inwardly from the inner surface 3608 of the grommet sidewall 3606. An inner surface or margin 3632 of each guard rib 3628 is spaced from the outer cylindrical sidewall 3630 of the finger 3604 with which it is associated. A bottom margin or surface 3634 of each guard rib 3628 can be coplanar with flange lower surface 3620 or, as shown, can be coplanar with lower surface 3627 of ring 3629. Each guard rib extends axially upwardly from surface 3634 until its termination at and fusion with a lower surface of a hinge element of the finger 3604 (similar to surface 3222 as seen in FIGURE 32).

In this illustrated embodiment, guard ribs 3628 are about as thick as centering ribs 3602. In this illustrated embodiment, three guard ribs 3628 are provided for each finger 3604 and are arranged around the axis so as to be equally spaced from each other and from adjacent centering ribs 3602. The number, placement and spacing of the guard ribs 3628 may be varied as other design constraints dictate. The thickness or angular extent of each guard rib 3628 is less than the spacing between it and a neighboring guard rib 3628 or centering rib 3602.

FIGURE 38 shows a grommet 3600 in a canted position relative to a vehicle mat retention post 3800. Grommet 3600 can take this position as affixed to a mat or floor tray (not shown), and as it is being lowered onto the post 3800. In this position and without the provision of guard ribs 3628, one or more of the fingers 3604 may catch onto the head 3802 of the post 3800, causing them to flex inwardly toward the axis and inadvertently to be bent over or even break off during mat installation. Each group of guard ribs 3628 prevents or least limits the post head 3802 from contacting radial outward surfaces of the associated finger 3604.

In summary, embodiments of a vehicle floor cover grommet have been shown and described which can accommodate each of a variety of different vehicle foot well retention posts. The present invention further provides an affixation device that allows vehicle floor covers to be attached in various vehicle foot wells. The affixation device has projections that bite into vehicle foot well carpeting and a fastener that is accepted into a top grommet or cap, a bottom grommet, or a floor cover thermoformed around an upstanding knob thereof. The vehicle floor cover is sandwiched in between the grommet and affixation device and can be releasably attached to the vehicle foot well.

While illustrated embodiments of the present invention have been described and illustrated in the appended drawings, the present invention is not limited thereto but only by the scope and spirit of the appended claims.

## Claims

1. A floor cover grommet adapted for use with vehicle foot well floor cover retention posts of different shapes, the grommet comprising:
a bottom grommet, an outer sidewall of the bottom grommet formed around an axis and having an inner surface and an outer surface, a floor cover retention flange of the bottom grommet joined to the outer sidewall and radially outwardly extending from the outer surface of the outer sidewall, the outer sidewall extending axially upwardly from the retention flange to a top plane of the bottom grommet;
a plurality of fingers formed around the axis to be angularly spaced from each other, each finger radially inwardly spaced from the inner surface of the outer sidewall, an inner sidewall surface of each finger disposed on an imaginary cylinder aligned with the axis, the fingers integrally formed with the outer sidewall of the bottom grommet;
each finger having a lower end axially downwardly spaced from the top plane of the outer sidewall, each finger having a bead, an inner end of the bead disposed radially inwardly from the inner sidewall surface of the last said finger and disposed near the lower end of the finger, each bead having an innermost margin that is disposed closest to the axis, an inclined surface of the bead extending upwardly and outwardly from the innermost margin of the bead to terminate at the inner sidewall surface of the finger; and
a top grommet, a downwardly extending sidewall of the top grommet adapted to attach to the outer surface of the outer sidewall of the bottom grommet.

2. A floor cover grommet according to Claim 1, wherein a radial distance, taken at right angles to the axis, between the innermost margin of the bead and the inner sidewall surface of the respective finger, is in the range of about 1 to about 3 mm.

3. A floor cover grommet according to Claim 1 or 2, wherein the inclined surface of the bead is at an angle relative to the axis in the range of about 30 to about 60 degrees, preferably wherein the angle is 45 degrees.

4. A floor cover grommet according to any preceding claim, wherein each bead has a second inclined surface extending downwardly and outwardly from the innermost margin of the bead to the lower end of the finger.

5. A floor cover grommet according to any preceding claim, wherein the top grommet is in the form of a cap that completely covers a top of the bottom grommet.

6. A floor cover grommet according to any preceding claim, wherein each finger has an outer sidewall surface, a radial distance, taken at right angles to the axis, between the innermost margin of the bead and the inner sidewall surface of the respective finger being less than or equal to a radial spacing, taken at right angles to the axis, between the inner surface of the outer sidewall of the bottom grommet and the outer sidewall surface of the finger.

7. A floor cover grommet according to any preceding claim, further comprising a plurality of angularly spaced apart vertical ribs disposed in alignment with and around the axis, each vertical rib positioned between and spaced from adjacent ones of the fingers, each vertical rib extending radially inwardly from the inner surface of the outer sidewall of the bottom grommet to the imaginary cylinder.

8. A floor cover grommet according to any preceding claim, wherein the bottom grommet is integrally molded from a polymeric material, preferably a thermoplastic polymeric material.

9. A floor cover grommet according to any preceding claim, wherein each finger has an outer sidewall surface that is radially inwardly spaced from the inner surface of the outer sidewall, and for each finger, a vertical rib radially inwardly extending from the inner surface of the outer sidewall to the outer sidewall surface of the finger, an angular width, relative to the axis, of the vertical rib being less than or equal to one-fourth of a corresponding angular width of the finger.

10. A floor cover grommet according to any preceding claim, wherein the outer sidewall of the bottom grommet extends axially upwardly from the retention flange to a hinge plane of the bottom grommet;
an annulus being disposed in the hinge plane of the bottom grommet and radially inwardly extending from the outer sidewall of the bottom grommet to an inner end of the annulus;
an upper end of each finger being joined to the inner end of the annulus so that the annulus spaces said upper end from the inner surface of the outer sidewall, each finger extending axially downwardly from the upper end of the finger to a lower end of the finger and having an inner sidewall surface disposed between the upper and lower finger ends that is in alignment with the axis;
the bead adapted to engage any of a plurality of differently shaped, predetermined vehicle foot well retention post heads with an interference fit.

11. A system for attaching a floor cover to a vehicle foot well, the system comprising:
a floor cover grommet according to any preceding claim; and
an affixation device adapted for attachment to a vehicle foot well, the affixation device having an affixation device body with an upper surface and a lower surface, a floor cover retention post upwardly extending from the upper surface of the affixation device body and adapted to engage the fingers of the bottom grommet.

12. A system according to Claim 11, wherein the affixation device is adapted to be affixed to carpeting, a plurality of projections extend from the lower surface of the affixation device body, each projection spaced from adjacent projections, the projections forming a two-dimensional array.

13. A system according to Claim 11, wherein the affixation device is adapted to be affixed to an uncarpeted surface of the vehicle foot well, an adhesive layer attached to and extending downwardly from the lower surface of the affixation device body.

14. A system according to any of claims 11 to 13, wherein each finger has an outer surface facing the inner surface of the outer sidewall of the bottom grommet, the bottom grommet further including, for each finger, at least one guard rib radially extending from the inner surface of the outer sidewall, an inner margin of said at least one guard rib being spaced from the outer surface of the finger with which it is associated.

15. A system according to any of claims 11 to 14, wherein the bottom grommet includes, for each finger, a plurality of guard ribs including said at least one guard rib, each of the plurality of guard ribs being spaced from adjacent ones of the plurality of guard ribs.

16. A system according to any of claims 11 to 15, wherein at least one guide rib radially extends from the inner surface of the outer sidewall of the bottom grommet, the guide rib positioned in between adjacent fingers, a thickness of the guide rib being less than the radial spacing between two adjacent fingers, an inner margin of the guide rib being spaced radially outwardly from the innermost margin of the bead.

17. A system according to any of claims 11 to 16, wherein each finger has an outer surface facing the inner surface of the outer sidewall of the bottom grommet, the bottom grommet further including, for each finger, a vertical rib radially extending from the inner surface of the outer sidewall to the outer surface of the finger, an angular width, relative to the axis, of the vertical rib being less than or equal to one-fourth of a corresponding angular width of the finger.
